(19) Europäisches Patentamt
European Patent Office
Office européen des brevets

(11) EP 1 083 790 B1

(12) # EUROPÄISCHE PATENTSCHRIFT

(45) Veröffentlichungstag und Bekanntmachung des Hinweises auf die Patenterteilung:
**28.04.2004 Patentblatt 2004/18**

(21) Anmeldenummer: **99920733.5**

(22) Anmeldetag: **22.04.1999**

(51) Int Cl.⁷: **A01N 25/10**, A01N 37/52, A01N 37/50, A01N 37/36

(86) Internationale Anmeldenummer:
**PCT/EP1999/002698**

(87) Internationale Veröffentlichungsnummer:
**WO 1999/056540 (11.11.1999 Gazette 1999/45)**

(54) **RETARDFORMULIERUNGEN VON PFLANZENSCHUTZWIRKSTOFFEN**

RETARDING FORMULATIONS OF ACTIVE SUBSTANCES USED FOR PLANT PROTECTION

FORMULATIONS RETARD DE PRINCIPES ACTIFS PHYTOSANITAIRES

(84) Benannte Vertragsstaaten:
**AT BE CH DE DK ES FI FR GB GR IE IT LI NL PT SE**

(30) Priorität: **30.04.1998 DE 19819282**

(43) Veröffentlichungstag der Anmeldung:
**21.03.2001 Patentblatt 2001/12**

(73) Patentinhaber: **BASF AKTIENGESELLSCHAFT**
**67056 Ludwigshafen (DE)**

(72) Erfinder:
- **ERNST, Andreas**
  **D-67551 Worms (DE)**
- **BRATZ, Matthias**
  **D-67117 Limburgerhof (DE)**
- **SCHNEIDER, Karl-Heinrich**
  **D-67271 Kleinkarlbach (DE)**
- **LANGE, Armin**
  **D-69121 Heidelberg (DE)**
- **KESSLER, Thomas**
  **D-67105 Schifferstadt (DE)**
- **SCHELBERGER, Klaus**
  **D-67161 Gönnheim (DE)**
- **STRATHMANN, Siegfried**
  **D-67117 Limburgerhof (DE)**

(56) Entgegenhaltungen:
**EP-A- 0 142 658**
**EP-A- 0 369 612**
**EP-A- 0 542 081**
**EP-A- 0 843 963**
**WO-A-97/46094**
**US-A- 4 400 374**
**US-A- 5 645 847**

- **DATABASE WPI Section Ch, Week 9546 Derwent Publications Ltd., London, GB; Class A97, AN 95-355137 XP002109859 & JP 07 242502 A (NIPPON BAYER AGROCHEM KK), 19. September 1995 (1995-09-19)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 083 790 B1

## Beschreibung

Gegenstand der vorliegenden Erfindung ist eine feste Zubereitung eines Pflanzenschutzmittels mit verzögerter Wirkstofffreisetzung, erhältlich durch Herstellung einer Schmelze enthaltend:

| | |
|---|---|
| 0.1-80 Gew.-% | eines im Pflanzenschutz verwendbaren Wirkstoffs oder einer Kombination solcher Wirkstoffe |
| 10-80 Gew.-% | mindestens eines mineralischen Füllstoffs |
| 0-20 Gew.-% | anorganische oder organische Additive |
| ad 100 Gew.-% | mindestens eines thermoplastischen, wasserunlöslichen Polymers aus der Gruppe der Polybutylenadipatterephthalate, |

wobei die Summe aller Inhaltsstoffe gleich 100 Gew.-% ist und anschließender Formgebung.

Weiterer Gegenstand der Erfindung ist ein Verfahren zur Herstellung einer festen Zubereitung eines Pflanzenschutzmittels, dadurch gekennzeichnet, daß man mindestens einen Wirkstoff, mindestens einen mineralischen Füllstoff, gegebenenfalls anorganische oder organische Additive mit mindestens einem thermoplastischen, wasserunlöslichen Polymer (Löslichkeit < 100mg pro L Wasser bei 20°C) in einem Extruder zu einem thermoplastischen Gemisch aufschmilzt und anschließend heiß oder kalt einer Formgebung unterwirft.

Weiterer Gegenstand der Erfindung ist ein Verfahren, dadurch gekennzeichnet, daß man eine derartige feste Zubereitung eines Pflanzenschutzmittels zur Bekämpfung von phytopathogenen Pilzen, unerwünschtem Pflanzenwuchs, unerwünschtem Insekten- oder Milbenbefall und/oder zur Regulation des Wachstums von Pflanzen in fester Form verwendet und auf Pflanzen, deren Lebensraum oder auf Saatgut einwirken läßt. Derartige feste Zubereitungen sind zudem dadurch gekennzeichnet, daß sie den oder die enthaltenden Wirkstoffe kontrolliert und langsam (vollständige Freisetzung in mehreren Tagen bis zu einigen Monaten) in die Umgebung (Boden, wässriges Medium, Pflanzen) freisetzen. Dadurch wird eine dem jeweiligen Anwendungszweck entsprechend gewünschte Bioverfügbarkeit über einen längeren Zeitraum realisiert. Dies ist beispielsweise erforderlich für in Boden und / oder Pflanze unzureichend persistente Wirkstoffe,für die Kulturpflanze phytotoxische Wirkstoffe oder auch für Anwendungen bei denen eine Wirkstoffverfügbarkeit bzw. Freisetzung über einen längeren Zeitraum erforderlich ist.

Wirkstoffhaltige Zubereitungen, die durch Schmelzextrusion hergestellt werden, sind allgemein bekannt. Das Extrudieren und die anschließende Formgebung von wirkstoffhaltigen Schmelzen wasserlöslicher Polymere, vorzugsweise von Copolymeren des Vinylpyrrolidons, ist in der EP-A 240904 und der EP-A 240906 beschrieben.

In WO 94/08455 wird die Co-Extrusion von Pflanzenschutzmitteln mit Polyvinylpyrrolidon, anschließendem Kühlen, Brechen und Mahlen beschrieben. Das gemahlene Extrudat dispergiert schnell und feinteilig in Wasser und ist für Spritzapplikationen geeignet.

Weiterhin sind feste Formulierungen von Pflanzenschutzmitteln bekannt, die durch Schmelzextrusion mit anschließender Formgebung hergestellt werden und eine kontrollierte, langsame Freisetzung von Pestiziden erlauben.

WO 91/03940 beschreibt bioabbaubare pestizidhaltige Matrices, deren Herstellung durch Schmelzextrusion mit anschließender Formgebung sowie deren Verwendung zur kontrollierten Freisetzung von Pestiziden. Als Matrix werden neben synthetischen Polymeren (<25%, hauptsächlich Ethylen-Vinylacetat-Copolymere), Stärke und Stärkederivate unter Zusatz von Wasser und Glycerin mit den entsprechenden Aktivsubstanzen (u.a. Carbosulfan) zusammen schmelzextrudiert. Je nach Rezeptur setzen die Matrices innerhalb von Wochen oder Monaten die Wirkstoffe in Wasser frei.

WO 95/28835 beschreibt die Herstellung von Formulierungen aus Agrochemikalien mit hydrophoben und hydrophilen Wachsen. Wirkstoff, Carnaubawachs und Polyethylenglykol werden schmelzextrudiert, gemahlen und klassiert. Die Fraktion 500 -1000 μm wird in Wasser freigesetzt. Die Wirkstoffe werden je nach Zusammensetzung nach 10 h zu 14-100% freigesetzt.

US 5,643,590 beschreibt insektizide Zusammensetzungen mit deutlich reduzierter Säugetiertoxizität. In einem vielschichtigen Prozess werden Pestizide zusammen mit PVC, Stabilisierer, Weichmacher und mineralischem Additiv bei 75-110°C intensiv vermischt, auf 70°C abgekühlt, in einen Extruder transferiert, bei 150-180°C extrudiert und anschließend pelletiert. Die nicht staubenden Pellets zeigen gegenüber Säugetieren eine deutlich reduzierte Toxizität und eine langanhaltende Aktivität (100% Wurm-Kontrolle über 10 Wochen).

DE 19 622 355 beschreibt die Herstellung kontrolliert freisetzender Formteile durch Schmelzextrusion und Spritzguß. Der Pflanzenschutzwirkstoff wird zusammen mit einem wasserunlöslichen Vinylacetatpolymer und einem wasserlöslichen Polymer (Polyvinylacetat/Vinylpyrrolidon) schmelzextrudiert und granuliert.

Formulierungen auf der Basis von synthetischen Polymeren und Stärke (WO 91/03940) sind in einfacher Weise, d.h. unter anderem ohne Zusatz von Wasser und/oder Glycerin nur mit hohem Polymeranteil (>60%) homogen zu plastifizieren und staubfrei zu granulieren und zeigen aufgrund der Temperatur- und Scherempfindlichkeit der Stärke schnell Zersetzungserscheinungen. Zudem zeigen derartige Formulierungen aufgrund von Quellung und geringer

Dichte eine nur unzureichende Sedimentation in Wasser bzw. in mit Wasser gefluteten Böden.

Formulierungen auf der Basis von hydrophoben und hydrophilen Wachsen (WO 95/28835) lassen sich durch einfaches Aufschmelzen mit dem Wirkstoff zwar einfach herstellen, sind aber aufgrund der wachsartigen Konsistenz nicht in einfacher Weise konfektionierbar (z.B. Stranggranulation, Heißabschlag) und sind bei Temperaturlagerung (14 Tage bei 54°C) nicht formstabil. Formulierungen aus Stearinsäure oder Stearylalkohol mit PEG sedimentieren zudem nicht in Wasser (Dichte < 1 g/ml).

US 5,643,590 beschreibt einen vielschichtigen, komplizierten Prozess indem Pestizide zusammen mit PVC, Stabilisierer, Weichmacher und mineralischem Additiv bei 75-110°C intensiv vermischt, auf 70°C abgekühlt, in einen Extruder transferiert, bei 150-180°C extrudiert und anschließend pelletiert werden. Aufgrund der mangelnden thermischen Stabilität vieler Wirkstoffe verbietet sich aufgrund der Zersetzungsgefahr eine hohe Temperaturbelastung. Der Fertigungsprozess sollte zudem möglichst einfach sein.

In DE 19 622 355 werden Pflanzenschutzwirkstoffe zusammen mit einem wasserunlöslichen Vinylacetatpolymer und einem wasserlöslichen Polymer (Polyvinylacetat/Vinylpyrrolidon) schmelzextrudiert und granuliert. Formulierungen auf der Basis von Polyvinylacetatpolymeren zeigen aufgrund niedriger Glastemperaturen eine unzureichende Wärmeformstabilität. Granulierte Schmelzextrudate aus Polyvinylacetat und Polyvinylpyrrolidon fließen bei Wärmelagerung (14 Tage 54°C) zu einer zusammenhängenden Masse zusammen.

Aus US 4 400 374 und EP-A 542 081 sind pestizidhaltige Formkörper bekannt, die die Wirkstoffe langsam freisetzen. Sie bestehen aus einer wirkstoffhaltigen mineralischen oder polymeren Trägermatrix.

Probleme stellen eine nur ungenügende Temperatur- bzw. Lagerstabilität, eine unzureichende Sedimentation, eine schlechte Granulierbarkeit, eine unzureichende Homogenität der Schmelze und eine komplizierte und kostenintensive Herstellung dar.

Aufgabe der vorliegenden Erfindung war die Bereitstellung einer festen, lagerstabilen, in Wasser sedimentierenden, granulierbaren, langsam freisetzenden Pflanzenschutzformulierung, die durch Schmelzextrusion einer Feststoffmischung aus preiswerten Komponenten mit anschließender Formgebung einfach hergestellt werden kann.

Die Aufgabe wurde gelöst durch die eingangs beschriebene Zusammensetzung und das Verfahren zu ihrer Herstellung.

Generell kommen Wirkstoffe in Betracht, die sich unter den Verarbeitungstemperaturen bei der Herstellung der Schmelze nicht zersetzen. Bevorzugt werden bei Raumtemperatur feste Substanzen, da sich diese einfacher mischen und dosieren lassen. Die Anwendung ist aber nicht auf feste Wirkstoffe beschränkt, da auch flüssige Wirkstoffe durch eine feste Matrix zu einer festen, temperatur- und lagerstabilen Formulierung verarbeitet werden können.

Die Menge der Wirkstoffkomponenten in der Gesamtzubereitung kann je nach Wirksamkeit, Freisetzungsgeschwindigkeit und Verarbeitbarkeit in weiten Grenzen variieren. So kann der Wirkstoffgehalt im Bereich von 0.1-80 Gew.-%, bevorzugt im Bereich von 0.5-40 Gew.-% und besonders bevorzugt im Bereich von 1-20 Gew.-% bezogen auf die gesamte Zubereitung liegen. Die einzige Bedingung ist, daß die Zubereitung noch thermoplastisch verarbeitbar ist.

Als Pflanzenschutzwirkstoffe seien Fungizide, Herbizide, Insektizide und Wachstumsregulatoren genannt. Zudem kommen Wirkstoffkombinationen in Betracht.

Die folgende Liste von Herbiziden zeigt mögliche Wirkstoffe auf, soll aber nicht auf diese beschränkt sein.

b1 1,3,4-Thiadiazole:
buthidazole, cyprazole

b2 Amide:
allidochlor (CDAA), benzoylprop-ethyl, bromobutide, chlorthiamid, dimepiperate, dimethenamid, s-dimethenamid, diphenamid, etobenzanid (benzchlomet), flamprop-methyl, fluthiamide, fosamin, isoxaben, monalide, naptalame, pronamid (propyzamid), propanil

b3 Aminophosphorsäuren:
bilanafos, (bialaphos), buminafos, glufosinate-ammonium, glyphosate, sulfosate

b4 Aminotriazole:
amitrol

b5 Anilide:
anilofos, mefenacet

b6 Aryloxyalkansäure:
2,4-D, 2,4-DB, clomeprop, dichlorprop, dichlorprop-p, dichlorprop-p (2,4-DP-P), fenoprop (2,4,5-TP), fluoroxypyr, MCPA, MCPB, mecoprop, mecoprop-P, napropamide, napropanilide, triclopyr, N-(1-Cyano-1,2-dimethylpropyl)-2-(2,4-dichlorphenoxy)propionamide

b7 Benzoesäuren:
chloramben, dicamba

b8 Benzothiadiazinonen:
bentazon

b9 Bleacher:
clomazone (dimethazone), diflufenican, fluorochloridone, flupoxam, fluridone, pyrazolate, sulcotrione (chlormesulone), isoxaflutole, isoxachlortole, mesotrione

b10 Carbamaten:
asulam, barban, butylate, carbetamid, chlorbufam, chlorpropham, cycloate, desmedipham, diallate, EPTC, esprocarb, molinate, orbencarb, pebulate, phenisopham, phenmedipham, propham, prosulfocarb, pyributicarb, sulfallate (CDEC), terbucarb, thiobencarb (benthiocarb), tiocarbazil, triallate, vernolate

b11 Chinolinsäuren:
quinclorac, quinmerac

b12 Chloracetanilide:
acetochlor, alachlor, butachlor, butenachlor, diethatyl ethyl, dimethachlor, metazachlor, metolachlor, pretilachlor, propachlor, prynachlor, terbuchlor, thenylchlor, xylachlor, s-metolachlor

b13 Cyclohexenonen:
alloxydim, tepraloxydim, clethodim, cloproxydim, cycloxydim, sethoxydim, tralkoxydim, 2-{1-[2-(4-Chlorphenoxy)propyloxyimino]butyl}-3-hydroxy-5-(2H-tetrahydrothiopyran-3-yl)-2-cyclohexen-1-on, butroxydim, clefoxydim

b14 Dichlorpropionsäuren:
dalapon

b15 Dihydrobenzofurane:
ethofumesate

b16 Dihydrofuran-3-one:
flurtamone

b17 Dinitroaniline:
benefin, butralin, dinitramin, ethalfluralin, fluchloralin, isopropalin, nitralin, oryzalin, pendimethalin, prodiamine, profluralin, trifluralin

b18 Dinitrophenole:
bromofenoxim, dinoseb, dinoseb-acetat, dinoterb, DNOC

b19 Diphenylether:
acifluorfen-sodium, aclonifen, bifenox, chlornitrofen (CNP), difenoxuron, ethoxyfen, fluorodifen, fluoroglycofen-ethyl, fomesafen, furyloxyfen, lactofen, nitrofen, nitrofluorfen, oxyfluorfen

b20 Dipyridylene:
cyperquat, difenzoquat-methylsulfat, diquat, paraquat dichlorid

b21 Harnstoffe:
benzthiazuron, buturon, chlorbromuron, chloroxuron, chlortoluron, cumyluron, dibenzyluron, cycluron, dimefuron, diuron, dymron, ethidimuron, fenuron, fluormeturon, isoproturon, isouron, karbutilat, linuron, methabenzthiazuron, metobenzuron, metoxuron, monolinuron, monuron, neburon, siduron, tebuthiuron, trimeturon

b22 Imidazole:
isocarbamid

b23 Imidazolinone:
imazamethapyr, imazapyr, imazaquin, imazethabenz-methyl (imazame), imazethapyr, imazapic

b24 Oxadiazole:
methazole, oxadiargyl, oxadiazon

b25 Oxirane:
tridiphane

b26 Phenole:
bromoxynil, ioxynil

b27 Phenoxyphenoxypropionsäureester:
clodinafop, cloquintocet, cyhalofop-butyl, diclofop-methyl, fenoxaprop-ethyl, fenoxaprop-p-ethyl, fenthiapropethyl, fluazifop-butyl, fluazifop-p-butyl, haloxyfop-ethoxyethyl, haloxyfop-methyl, haloxyfop-p-methyl, isoxapyrifop, propaquizafop, quizalofop-ethyl, quizalofop-p-ethyl, quizalofop-tefuryl

b28 Phenylessigsäuren:
chlorfenac (fenac)

b29 Phenylpropionsäuren:
chlorophenprop-methyl

b30 Protoporphyrinogen-IX-Oxydase-Hemmer:
benzofenap, cinidon-ethyl, flumiclorac-pentyl, flumioxazin, flumipropyn, flupropacil, fluthiacet-methyl, pyrazoxyfen, sulfentrazone, thidiazimin, carfentrazone

b31 Pyrazole:
nipyraclofen, ET 751

b32 Pyridazine:
chloridazon, maleic hydrazide, norflurazon, pyridate

b33 Pyridincarbonsäuren:
clopyralid, dithiopyr, picloram, thiazopyr, diflufenzopyr

b34 Pyrimidylethern:
pyrithiobac-säure, pyrithiobac-sodium, KIH-2023, KIH-6127, pyribenzoxym

b35 Sulfonamide:
flumetsulam, metosulam

b36 Sulfonylharnstoffe:
amidosulfuron, azimsulfuron, bensulfuron-methyl, chlorimuronethyl, chlorsulfuron, cinosulfuron, cyclosulfamuron, ethametsulfuron methyl, ethoxysulfuron, flazasulfuron, halosulfuronmethyl, imazosulfuron, metsulfuron-methyl, nicosulfuron, primisulfuron, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]carbonyl]-2-(trifluoromethyl)-Benzenesulfonamide, sulfosulfuron, idosulfuron

b37 Triazine:
ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin

b38 Triazinone:

ethiozin, metamitron, metribuzin

b39 Triazolcarboxamide:
triazofenamid

b40 Uracile:
bromacil, lenacil, terbacil

b41 Verschiedene:
benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, flucabazone, oxaciclomefone (MY 100)

Die folgende Liste von Verbindungen mit wachstumsregulatorischer Wirkung zeigt mögliche Wirkstoffe aus dieser Gruppe auf, soll aber nicht auf diese beschränkt sein.

Verbindungen mit wachstumsregulatorischer Wirkung, wie

1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clof encet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberillin, Guazatin, Imazalil, Indolylbuttersäure, Indolylessigsäure, Karetazan, Kinetin, Lactidichlor-ethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobezoicacid, Triapenthenol, Triazethan, Tribufos, Trinexapacethyl, Uniconazole.

Die folgende Liste von Insektiziden zeigt mögliche Wirkstoffe auf, soll aber nicht auf diese beschränkt sein.

Neonicotinoide/Chlornicotinyl-Verbindungen:

Imidacloprid, Acetamiprid, Nitenpyram, Thiacloprid, Thiamethoxam, MIT-446
Organophosphate, wie
Acephate, Azinphos-methyl, Chlorpyrifos, Dimethoate, Disulfoton Fosthiazate, Methamidophos, Methidathion, Methyl-Parathion, Oxydemeton-methyl, Phorate, Phosalone,
Phosmet, Profenofos, Trichlorfon, Malathion, Phosphamidon, Monocrotophos, Fenitrothion, Diazinon, EPN
Carbamate, wie
Alanycarb, Aldicarb, Benfuracarb, Carbofuran, Carbosulfan, Furathiocarb, Methomyl, Oxamyl, Pirimicarb, Thiodicarb, Fenobucarb
Pyrethroide, wie
Bifenthrin, Cyfluthrin, Cypermethrin, Deltamethrin, Esfenvalerate,
Fenpropathrin, Lambda-Cyhalothrin, Permethrin, Tau-Fluvalinate, Tralomethrin, Zeta-Cypermethrin
Harnstoffderivate, wie
Diflubenzuron, Flucycloxuron, Flufenoxuron, Hexaflumuron, Lufenuron,
Novaluron, Triflumuron
Juvenuide, wie
Buprofezin, Diofenolan,Fenoxycarb, Pyriproxifen, Methoxyfenozide, Tebufenozide
Verschiedene, wie
Abamectin, Spinosad, Amitraz, Cartap, Chlorfenapyr, Diafenthiuron, Fipronil, Fudioxonil
Pyridaben, Tebufenpyrad, Fenazaquin, Fenpyroxymate, Thiocyclam, Silafluofen

Als besonders bevorzugt sind zu nennen:

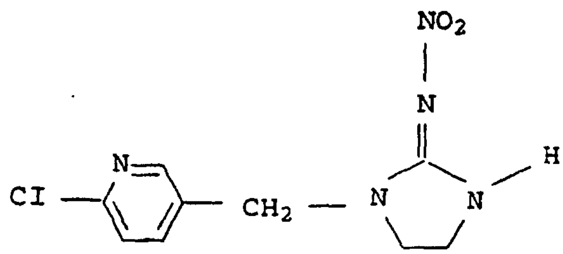

III

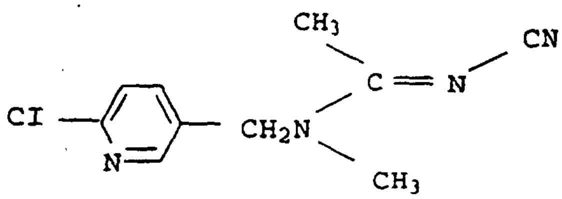

IV

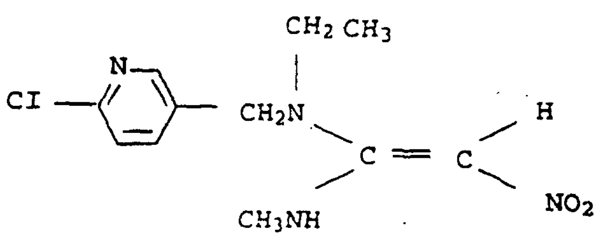

V

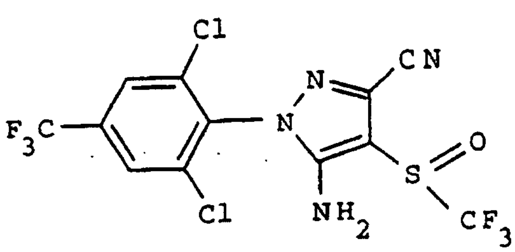

(VI)

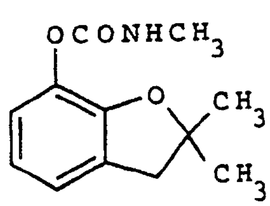

(VII)

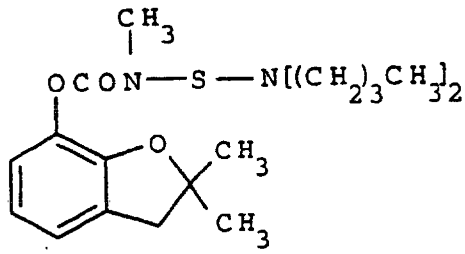

(VIII)

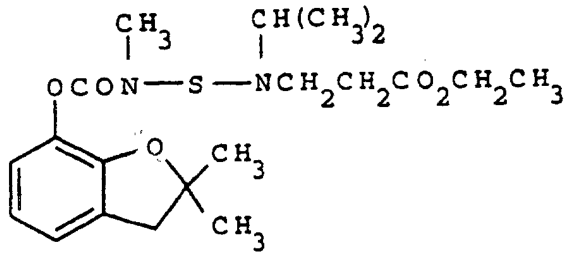

(IX)

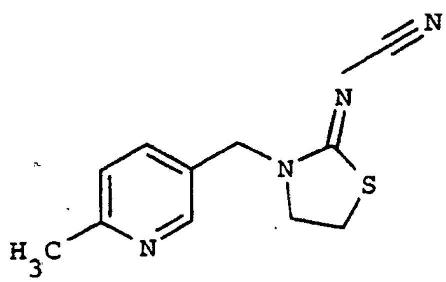

(X)

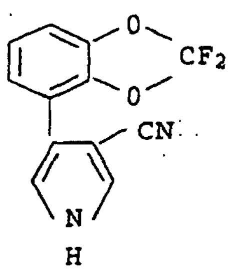

XI

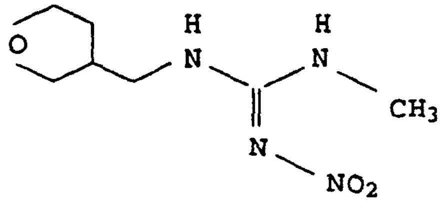

XII

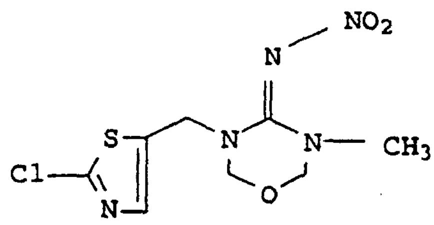

XIII

Die Insektizide der Formeln III bis IX sind unter den nachfolgend in Klammern genannten Handelsnamen kommerziell erhältlich:

III: EP-A 192,060, Common name: Imidacloprid (Handelsname: Admire®, Gaucho®, Fa. Bayer)

IV: Common name: Acetamiprid (Handelsname Mospilan®, Fa. Nippon Soda)

V: CAS RN 120738-89-8, Common name: Nitenpyram (Handelsname: Bestgard®, Fa. Takeda Chemicals);

VI: Colliot et al., Proc. Br. Conf. Dis. 1992, 1, 29, Common name: Fipronil (Handelsname: Regent®, Fa. Rhone-Poulenc);

VII: US-A 3,474,170; US-A 3,474,171 und DE-C 1,493,646; Common name: Carbofuran (Handelsname Curaterr®, Fa. Bayer; Furadan®, Fa. FMC) ;

VIII: Proc. Br. Crop Prot. Conf., 1979, Vol.2, 557, Common name:Carbosulfan (Handelsname: Marshall®, Fa. FMC);

IX: FR-A 2,489,329; Proc. Int. Congr. Plant Prot. 10th, 1983, 2, 360, Common name: Benfuracarb (Handelsname: Oncol®, Fa. Otsuka, Furacon®, Fa. Siapa Chem.)

X: CAS RN 111 988-49-9, Common name: Thiacloprid (Entwicklungsprodukt der Fa. Bayer);

XI: CAS RN [131341-86-1], Common name: Fludioxonil, (Handelsname: Celest®, Fa. Ciba Geigy),
4-(2,2-Difluor-1,3-benzodioxol-7yl)-1H-pyrrol-3-carbonitril

XII: Tefuranitde (proposed), MTI-466,
The 1998 Brighton Conference "Pest and Diseases", Conference Proceedings, Vol 1, page 81

XIII: Thiamethoxam (CGA 293343),
The 1998, Brighton Conference "Pest and Diseases", Conference Proceedings, Vol 1, page 27

Die folgende Liste von Fungiziden zeigt mögliche Wirkstoffe auf, soll aber nicht auf diese beschränkt sein.

Fungizide aus der Klasse

Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;

Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäure-di-isopropylester;

heterocyclische Substanzen, wie 2-Heptadecyl-2-imidazolin-acetat, 2,4-Dichlor-6-(o-chloranilino)-s-triazin, O, O-Diethyl-phthalimidophosphonothioat, 5-Amino-1-[bis-(dimethylamino)-phosphinyl]-3-phenyl-1,2,4- triazol, 2,3-Dicyano-1,4-dithioanthrachinon, 2-Thio-1,3-dithiolo[4,5-b]chinoxalin, 1-(Butylcarbamoyl)-2-benzimidazol-carbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid, N-Trichlormethylthio-tetrahydrophthalimid, N-Trichlormethylthio-phthalimid, N-Dichlorfluormethylthio-N',N'-dimethyl-N-phenyl-schwefelsäurediamid, 5-Ethoxy-3-trichlormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethylfuran-3-carbonsäureamid, 2-Methyl-benzoesäure-anilid, 2-Iodbenzoesäure-anilid, N-Formyl-N-morpholin-2,2,2-trichlorethylacetal, Piperazin-1,4-diylbis-1- (2,2,2-trichlorethyl)-formamid, 1-(3,4-Dichloranilino)-1- formylamino-2,2,2-trichlorethan, 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethyl-morpholin, N-[3-(p-tert.-Butylphenyl)-2-methylpropyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-propyl-1,3-dioxolan-2-ylethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-ylmethyl]-1H-1,2,4-triazol, a-(2-Chlorphenyl)-a-(4-chlorphenyl)-5-pyrimidin-methanol, 5-Butyl-2-dimethylamino-4-hydroxy-6-methyl-pyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol,

Anilinopyrimidine, wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,

Phenylpyrrole, wie 4-(2,2-Difluor-1,3-benzodioxol-4-yl)-pyrrol-3-carbonitril,

Zimtsäureamide, wie 3-(4-Chlorphenyl)-3-(3,4-dimethoxyphenyl)-acrylsäuremorpholid,

sowie verschiedene Fungizide, wie Dodecylguanidinacetat, 3-[3-(3,5-Dimethyl-2-oxycyclohexyl)-2-hydroxyethyl]-glutarimid, Hexachlorbenzol, DL-Methyl-N-(2,6-dimethyl-phenyl)-N-furoyl-(2)-alaninat, DL-N-(2,6-Dimethyl-phenyl)-N-(2'-methoxyacetyl)-alanin-methyl-ester, N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-[3,5-Dichlorphenyl(-5-methyl-5-methoxymethyl]-1,3-oxazolidin- 2,4-dion, 3-(3,5-Dichlorphenyl)-1-isopropylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, 1-[2-(2,4-Dichlorphenyl)-pentyl]-1H-1,2,4-triazol, 2,4-Difluor-a-(1H-1,2,4-triazolyl-1-methyl)-benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)-methylsilyl)-methyl)-1H-1,2,4-triazol, 2-(4-Chlorphenyl)-3-Cyclopropyl-1-(1H-1,2,4-triazol-1-yl)-butan-2-ol, 3-Chlor-4-[4-metyl-2-(1H-1,2,4-triazol-1-ylmethyl)-1,3-dioxolan-2-yl]phenyl-4-chlorphenylether, 1,3-Dimethyl-5-chlor-pyrazol-4carbonsäure-[2,3-(2,4,4-trimethyltetrahydrofuran)-anilid], 2-Methyl-4-trifluormethyl-thizol-5-carbonsäure-(2,6-dibrom-4-trofluormethoxy-anilid), 2-Chlornicotinsäure-[2-(4'-chlorphenyl)anilid, N-[(R)-1-(2,4-dichlorphenyl)-ethyl]-(S)-2-cyano-3,3-dimethylbutanamid, N-[(R)-1-(4-chlorphenyl)-ethyl]-(S)-2,2-cyclopropyl-2',2-dichlor-3'-methyl-butanamid, 3-Allyloxy-1,2-benzisothiazol-1,1-dioxid, 2,3-Benzisothiadiazol-1-carbonsäurethiolester, 1,2,5,6-Tetrahydro-pyrrolo-[3,2,1-i,j]-chinolin-4-on, 5-Methyl-1,2,4-triazolo[3,4-b]benzothiazol, di-idopropyl-1,3-dithiolan-2-yliden-malonat, 4-(2,2-Difluor-1,3-benzodioxol-4-yl)-pyrrol-3-carbonitril, N-(i-Propoxycarbonyl)-L-valin-(R)-1-(2-naphthyl)-ethylamid, N-(i-Propoxycarbonyl)-L-valin-(R,S)-1-(4-methylphenyl)-ethylamid,

Strobilurine, wie Methyl-E-methoxyimino-[a-(o-tolyloxy)-o-tolyl]acetat, Methyl-E-2-{2-[6-(2-cyanophenoxy)-pyrimidin-4-yl-oxy]-phenyl}-3-methoxyacrylat, Methyl-E-methoxyimino-[a-(2-phenoxyphenyl)]-acetamid, Methyl-E-methoxyimino-[a-(2,5-dimethylphenoxy)-o-tolyl}-acetamid, (E,E)-methoxyimino-{2-[1-(3-trifluormethylphenyl)-ethylidenaminooxymethyl]-phenyl}acetic-acid-methylester.

Aus der Klasse der Strobilurine sind darüberhinaus fungizid wirksame Verbindungen der Formel I und II zu nennen.

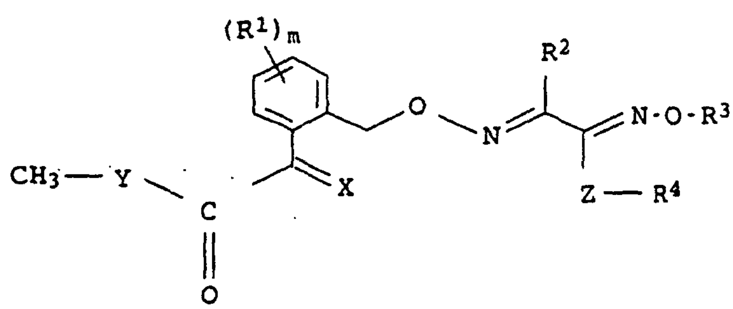

(I)

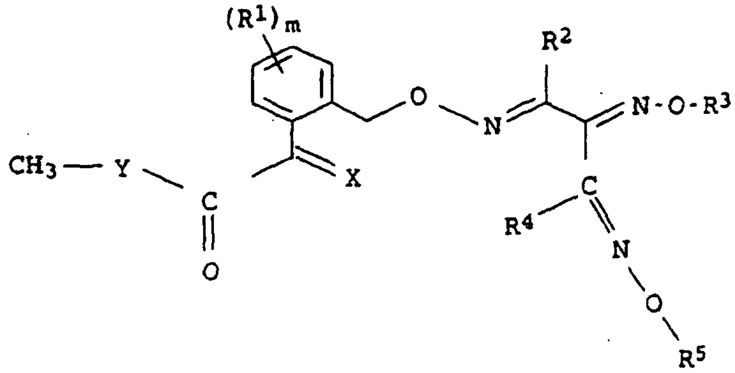

(II)

in der die Substituenten die folgende Bedeutung haben:

X NOCH$_3$, CHOCH$_3$. CHCH$_3$;

Y O, NH;

Z Sauerstoff, Schwefel, Amino (NH)

$R^1$ Wasserstoff, Cyano, Nitro, Trifluormethyl, Halogen, $C_1$-$C_4$-Alkyl und $C_1$-$C_4$-Alkoxy;

m 0, 1 oder 2, wobei die Reste $R^2$ verschieden sein können, wenn m für 2 steht;

$R^2$ Wasserstoff, Cyano, $C_1$-$C_4$-Alkyl, $C_1$-$C_4$-Halogenalkyl, $C_3$-$C_6$-Cycloalkyl;

$R^4$ Wasserstoff,
$C_1$-$C_6$-Alkyl, $C_2$-$C_6$-Alkenyl, $C_2$-$C_6$-Alkinyl, wobei die Kohlenwasserstoffreste dieser Gruppen partiell oder vollständig halogeniert sein können oder einen bis drei der folgenden Reste tragen können: Cyano, Nitro, Hydroxy, Mercapto,Amino, Carboxyl, Aminocarbonyl, Aminothiocarbonyl, Halogen, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_2$-$C_6$-Alkenyloxy, $C_3$-$C_6$-Cycloalkyl, $C_3$-$C_6$-Cycloalkyloxy, Heterocyclyl, Heterocyclyloxy, Aryl, Aryloxy, Aryl-$C_1$-$C_4$-alkoxy, Arylthio, Aryl-$C_1$-$C_4$-alkylthio, Hetaryl, Hetaryloxy, Hetaryl-$C_1$-$C_4$-alkoxy, Hetarylthio, Hetaryl-$C_1$-$C_4$-alkylthio, wobei die cyclischen Reste ihrerseits partiell oder vollständig halogeniert sein können und/oder ein bis drei der folgenden Gruppen tragen können: Cyano, Nitro, Hydroxy, Mercapto, Amino, Carboxyl, Aminocarbonyl, Aminothiocarbonyl, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, Benzyl, Benzyloxy, Aryl, Aryloxy, Arylthio, Hetaryl, Hetaryloxy, Hetarylthio und C(=NOR$^7$)-A$_n$-R$^8$;
$C_3$-$C_6$-Cycloalkyl, $C_3$-$C_6$-Cycloalkenyl, Heterocyclyl, Aryl, Hetaryl, wobei die cyclischen Reste partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, Benzyl, Benzyloxy, Aryl, Aryloxy, Hetaryl und Hetaryloxy;

$R^3$, $R^5$ unabhängig voneinander Wasserstoff,
$C_1$-$C_{10}$-Alkyl, $C_3$-$C_6$-Cycloalkyl, $C_2$-$C_{10}$-Alkenyl, $C_2$-$C_{10}$-Alkinyl, $C_1$-$C_{10}$-Alkylcarbonyl, $C_2$-$C_{10}$-Alkenylcarbonyl, $C_3$-$C_{10}$-Alkinylcarbonyl oder $C_1$-$C_{10}$-Alkylsulfonyl, wobei diese Reste partiell oder vollständig halogeniert sein können oder einen bis drei der folgenden Gruppen tragen können: Cyano, Nitro, Hydroxy, Mercapto,

Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, $C_3$-$C_6$-Cycloalkyl, $C_3$-$C_6$-Cycloalkyloxy, Heterocyclyl, Heterocyclyloxy, Benzyl, Benzyloxy, Aryl, Aryloxy, Arylthio, Hetaryl, Hetaryloxy und Hetarylthio, wobei die cyclischen Gruppen ihrerseits partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Benzyl, Benzyloxy, Aryl, Aryloxy, Arylthio, Hetaryl, Hetaryloxy, Hetarylthio oder C(=NOR$^7$)-$A_n$-R$^8$;

Aryl, Arylcarbonyl, Arylsulfonyl, Hetaryl, Hetarylcarbonyl oder Hetarylsulfonyl, wobei diese Reste partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylcarbonyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino-, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Benzyl, Benzyloxy, Aryl, Aryloxy, Hetaryl, Hetaryloxy oder C(=NOR$^7$)-$A_n$-R$^8$;

wobei

A für Sauerstoff, Schwefel oder Stickstoff steht und wobei der Stickstoff Wasserstoff oder $C_1$-$C_6$-Alkyl trägt;

n 0 oder 1 bedeutet;

R$^7$ Wasserstoff oder $C_1$-$C_6$-Alkyl bedeutet und

R$^8$ Wasserstoff oder $C_1$-$C_6$-Alkyl bedeutet,

sowie deren Salze.

Weitere Strukturen der Verbindungen I bzw. II sind in WO 96/32015, Seite 3 bis 18 ausführlich offenbart.

Bevorzugt setzt man bei der Bereitstellung der Mischungen die Wirkstoffe der Formel I bzw. II ein, denen man je nach Bedarf weitere Wirkstoffe gegen Schädlinge (z.B. Insekten, Spinntiere oder Nematoden) oder Schadpilze oder auch herbizide oder wachstumsregulierende Wirkstoffe oder Düngemittel beimischen kann.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Speziell eignen sie sich zur Bekämpfung folgender Pflanzenkrankheiten:

- *Alternaria*-Arten an Gemüse und Obst,
- *Botrytis cinerea* (Grauschimmel) an Erdbeeren, Gemüse, Zierpflanzen und Reben,
- *Cercospora arachidicola* an Erdnüssen,
- *Erysiphe cichoracearum* und *Sphserotheca fuliginea* an Kürbisgewächsen,
- *Erysiphe graminis* (echter Mehltau) an Getreide,
- *Fusarium*- und *Verticillium*-Arten an verschiedenen Pflanzen,
- *Helminthosporium*-Arten an Getreide,
- *Mycosphaerella*-Arten an Bananen,

- *Phytophthora infestans* an Kartoffeln und Tomaten,
- *Plasmopara viticola* an Reben,
- *Podosphaera leucotricha* an Äpfeln,
- *Pseudocercosporella herpotrichoides* an Weizen und Gerste,
- *Pseudocercosporella*-Arten an Hopfen und Gurken,
- *Pseudoperonospora*-Arten an Hopfen und Gurken,
- *Puccinia*-Arten an Getreide,
- *Pyricularia oryzae* an Reis,
- *Rhizoctonia*-Arten an Baumwolle, Reis und Rasen,
- *Septoria nodorum* an Weizen,
- *Uncinula necator* an Reben,
- *Ustilago*-Arten an Getreide und Zuckerrohr, sowie
- *Venturia inaequalis* (Schorf) an Äpfeln.

Bei den Fungiziden seien bevorzugt systemische Strobilurine genannt, die als Retardformulierung im Reisanbau Verwendung finden können. Diese sollen als Streugranulat appliziert werden. Das staubfreie und einheitliche Granulat sollte in bewässerten Feldern gut sedimentieren bzw. beim Fluten von behandelten Feldern nicht aufschwimmen und sollte beim Transport und bei der Anwendung auch in wärmeren Regionen form- und lagerstabil sein. Die Aufwandmengen liegen dabei für die Verbindungen der Formel I bzw. II bei 2 bis 0,01 kg/ha, vorzugsweise 0,5 bis 0,02 kg/ha, insbesondere 0,25 bis 0,03 kg/ha.

Die Formulierungen enthalten im allgemeinen 0,1 bis 80, vorzugsweise 0,5 bis 40, besonders bevorzugt 1 bis 20 Gew.-% einer der Verbindungen der Formel I bzw. II.

Die Wirkstoffe werden dabei in einer Reinheit von 90 % bis 100 %, vorzugsweise 95 % bis 100 % (nach $^1$H-NMR- oder HPLC-Spektrum) eingesetzt.

Die Verbindungen der Formel I bzw. II, ihre Mischungen oder die entsprechenden Formulierungen werden angewendet, indem man die Schadpilze, ihren Lebensraum oder die vor Pilzbefall zu schützenden Materialien, Pflanzen, Samen, Böden, Flächen oder Räume mit einer fungizid wirksamen Menge der Mischung bzw. der Verbindungen der Formel I bzw. II bei getrennter Ausbringung, behandelt. Die Behandlung kann vor oder nach dem Befall durch die Schadpilze erfolgen.

Als polymere Bindemittel werden bevorzugt amorphe und teilkristalline Polymere sowie Mischungen aus beiden verwendet, die sich thermoplastisch, d.h. als zähflüssige Schmelze verarbeiten lassen und zudem eine Wasserlöslichkeit von weniger als 100 mg pro Liter Wasser bei 20°C aufweisen, und aus der Gruppe der Polybutylen adipat terephthalate ausgewählt sind.

Besonders bevorzugt sind biologisch abbaubare Polybutylenadipatterephthalate, wie sie in DE 4 440 858 beschrieben werden (Ecoflex® , BASF).

Als mineralische Füllstoffe kommen Substanzen in Betracht, die aufgrund ihrer Dichte die Sedimentation der Granulate im wässrigen Medium verbessern bzw. ermöglichen, die sich in hohen Anteilen in thermoplastische Polymere einarbeiten lassen, nicht zu hart sind, d.h. im Extruder gut zu verarbeiten sind, chemisch indifferent sind, die Temperaturformstabilität der Formulierung erhöhen, selbst thermisch stabil sind, die Granulierbarkeit der Schmelze verbessern und die Freisetzung des Wirkstoffs ermöglichen, ökologisch unbedenklich und zudem möglichst preiswert sind. Zudem wird die Einarbeitbarkeit niedrigviskoser Komponenten, wie z.B. des Wirkstoffs verbessert. Art und Anteil des Füllstoffs beeinflussen außerdem die Freisetzung des oder der Wirkstoffe aus der Polymermatrix.

Im besonderen die bessere Sedimentation (hohe Dichte des Minerals), Granulierbarkeit (Füllstoffe besetzen amorphe Bereiche des Polymers und vermindern somit die intermolekulare Beweglichkeit; sie erhöhen somit die Temperaturformstabilität und vermindern die Elastizität; das Produkt läßt sich leichter granulieren) und die Erhöhung der Temperaturformstabilität machen den Zusatz eines mineralischen Füllstoffs nicht nur aus wirtschaftlichen Gesichtspunkten sinnvoll, sondern zudem technisch notwendig.

Beispiele für geeignete mineralische Füllstoffe sind: Oxide, Hydroxide, Silikate, Carbonate und Sulfate von Calcium, Magnesium, Aluminium und Titan; im Einzelfall zum Beispiel Kreide, Gips, Bentonit, Kaolin, Wollastonit, Talkum, Phlogopit, Tonmineralien allgemein und Mischungen verschiedener mineralischer Füllstoffe.

Bevorzugte mineralische Füllstoffe sind beispielsweise Kalk (Calciumcarbonat), Gips (Calciumsulfat) und Talkum (Magnesiumsilikat), die sich aufgrund ihrer geringen Härte und ihrer Schmierfähigkeit besonders gut verwenden lassen.

Die Menge an mineralischem Füllstoff kann je nach Granulierbarkeit und Verarbeitbarkeit in weiten Grenzen variieren. So kann der Füllstoffgehalt im Bereich von 10-80 Gew.-%, bevorzugt im Bereich von 10-70 Gew.-% und besonders bevorzugt im Bereich von 10-60 Gew.-%, bezogen auf die gesamte Zubereitung, liegen. Die einzige Bedingung ist, daß die Zubereitung noch thermoplastisch verarbeitbar ist.

Zudem werden optionell anorganische oder organische Additive verwendet um die Verarbeitbarkeit der Mischung zu verbessern und die Freisetzung des oder der Wirkstoffe zu modulieren. Der Anteil der Additive, bezogen auf die gesamte Zubereitung, sollte im Bereich von 0-20 Gew.-%, bevorzugt im Bereich von 0-10 Gew.-% und besonders bevorzugt im Bereich von 0-5 Gew.-% liegen. Die einzige Bedingung ist, daß die Zubereitung noch thermoplastisch verarbeitbar ist.

Die Gruppe der Additive läßt sich folgendermaßen gliedern:

1) Übliche extrusionstechnische Hilfsstoffe, wie Schmiermittel, Formtrennmittel, Flußhilfsmittel, Weichmacher und Stabilisatoren, wie sie beispielsweise in DE 19504832 beschrieben werden.

2) Additive, die die Freisetzung des oder der Wirkstoffe beeinflussen:

- wasserlösliche anorganische Substanzen, wie z.B. Natriumchlorid, Natriumsulfat oder Calciumsulfat
- wasserlösliche organische Substanzen, wie z.B. Neopentylglykol, Polyethylenglykol oder Harnstoff
- nichtionische oder ionische Tenside, wie z.B. Fettalkoholethoxylate, Alkylbenzolsulfonate oder Alkylnaphthalinsulfonate
- Wachse, Fettalkohole und -säuren, Fette und Öle, wie z.B. Carnaubawachs, Stearinsäure, Stearylalkohol oder Rizinusöl

Um die erfindungsgemäßen Zubereitungen herzustellen, können alle Komponenten entweder direkt in Form einer physikalischen Mischung miteinander verschmolzen werden oder mit der bereits vorliegenden Polymerschmelze gemischt werden. Im allgemeinen ist es üblich eine physikalische Mischung aus Wirkstoff, Füllstoff, Additiv und Polymer gemeinsam im freien Zulauf, z.B. über eine Differentialdosierwaage in den Extruder zu dosieren und dort zu verschmelzen.

Die Verfahrensschritte des Mischens und Aufschmelzens können auf bekannte Art und Weise durchgeführt werden, wie beispielsweise in EP-A 240904, EP-A 337256 und EP-A 358195 beschrieben.

Im allgemeinen erfolgt die Vermischung der Komponenten in der Schmelze in an sich bekannter Weise in Knetern oder Extrudern, vorzugsweise in Ein- oder Doppelschneckenextrudern in einem Temperaturbereich zwischen 50 und 200°C, bevorzugt zwischen 50 und 150°C, und besonders bevorzugt in einem Temperaturbereich zwischen 50 und 140°C.

Der Extruder kann je nach Bedarf Misch-, Knet- und Rückführelemente enthalten. Gegebenenfalls können vorhandene Lösemittel und Restfeuchte mittels Entgasungsöffnungen oder Vakuumpumpen während der Extrusion abgezogen werden. Zudem können Komponenten in flüssiger als auch in fester Form durch seitliche Pumpen bzw. Förderaggregate eingebracht werden. Die Form des Extrusionswerkzeuges richtet sich nach der gewünschten Form.

Die Formgebung der austretenden Schmelze kann durch Stranggranulation der ganz oder teilweise abgekühlten Stränge, durch Heißabschlag der Schmelze am Extruderkopf mit einem Messerwalzengranulator, durch Unterwassergranulation direkt beim Austritt der Schmelze aus der Düse oder durch eine andere in der Kunststofftechnik üblichen Methode realisiert werden, die u.a. in EP-A 240906 und DE-A 3 830 355 beschrieben sind. Die so erhaltenen festen Formen können z.B. durch Spritzguß zu Formkörpern weiterverarbeitet werden.

Zudem kann durch Coextrusion oder nachträgliches Coating, beispielsweise im Wirbelbett, mit Hilfe von gegebenenfalls wirkstoff- und polymerhaltigen Lösungen oder Dispersionen ein Schichtaufbau realisiert werden, der die Freisetzung des erfindungsgemäßen Formkörpers moduliert oder eine zusätzliche Wirkstoffkomponente beinhaltet.

Im folgenden wird das erfindungsgemäße Verfahren anhand von Beispielen erläutert.

Allgemeine Durchführung

Die in den Beispielen angegebenen Mengen an Wirkstoff, Füllstoff, Additiv und Polymeren wurden gemischt und über eine Dosierwaage in die Förderzone (Zone 0) eines dichtkämmenden, gegenläufigen Doppelschneckenextruders (Haake Rheocord 90 mit Mixing-Schnecke und 2mm-Düse, Fa. Haake, 76227 Karlsruhe) eingebracht und über 5 Temperaturzonen bei einem Durchsatz von 1 kg pro Stunde und einer Schneckendrehzahl von 200 rpm homogenisiert, plastifiziert und am Extruderkopf (Zone 4) über eine 2 mm Düse auf ein Metallförderband ausgetragen. Der Strang wurde vom Metallförderband über eine Luftrinne und eine Förderwalze vom Typ Haake TP1 in einen Stranggranulator 1.1mm, Typ SGS 100/E, C.F. Scheer & CIE eingetragen und zu einem zylindrischen Granulat mit einem durchschnittlichen Querschnitt von 1.0-1.2 mm konfektioniert.

In folgender Tabelle sind Angaben zu dem Temperaturverlauf in Extruder (Zone 0-4) und Granulator der folgenden Beispiele aufgeführt:

| | Zone 0 | Zone 1 | Zone 2 | Zone 3 | Zone 4 | Granulator |
|---|---|---|---|---|---|---|
| Temperatur in [°C] | 25 | 130 | 130 | 130 | 130 | 30 |

Folgende Einsatzstoffe wurden verwendet:

Wirkstoffe:

Verbindung 1: 2-[2-(2-Isopropoxy-2-(Z)-methoxyimino-1-methyl-(E)-ethylidenaminooxymethyl)-phenyl]-2-(E)-methoxyimino-N-methylacetamid
Wasserlöslichkeit: 1.34 g/L , Schmelzpunkt: 57°C

Verbindung 2: 2-[2-(2-sec-Butoxy-2-(Z)-methoxyimino-1-methyl-(E)-ethylidenaminooxymethyl)-phenyl]-2-(E)-methoxyimino-N-methylacetamid
Wasserlöslichkeit: 1,19 g/L , Schmelzpunkt: 48-50°C

Verbindung 3: 2-[2-(2-Isobutoxy-2-(Z)-methoxyimino-1-methyl-(E)-ethylidenaminooxymethyl)-phenyl]-2-(E)-methoxyimino-N-methylacetamid
Wasserlöslichkeit: 0,5 g/L , Schmelzpunkt: 68°C

Verbindung 4: 2-(( 3,4-[E],-Bis(methoximino), 2-[E]-oximinopentyl)methyl)-alpha-[E]-methoximino-N-methyl-phenylacetamid Wasserlöslichkeit: 0.450 g/L , Schmelzpunkt: 91°C

Verbindung 5: 2-((3-[E]-Methoxyimino, 5-methyl, 2-[E]-oximinohex-4-en-yl)methyl)-alpha-[E]-methoximino-N-methyl-phenylacetamid Wasserlöslichkeit: 0.058 g/L , Schmelzpunkt: 85°C

Verbindung 6: N-(3,4-dichlorophenyl)propanamid Wasserlöslichkeit: 0.13 g / L, Schmelzpunkt: 92°C

Polymere:

- Polyvinylacetat, Vinnapas UW4, Vinnapas B5, Wacker-Chemie, DE
- Polyvinylpyrrolidon, Luviskol K 30, BASF AG, DE
- Polyvinylpyrrolidon/vinylacetat, Luviskol VA 64, BASF AG, DE
- Polybutylenadipatterephthalat, Ecoflex, BASF AG, DE
- Polyethylen, Lupolen 1800S, BASF AG, DE

Füllstoffe/Additive:

- Kartoffelstärke, Perfectamyl D6, AVEBE, DE
- Carnaubawachs, Roth GmbH, DE
- Polyethylenglykol, Pluriol 9000, BASF AG, DE
- Neopentylglykol (NPG), BASF AG, DE
- Calciumsulfat, Hemihydrat, Merck, DE
- Natriumchlorid, Merck, DE
- Calciumcarbonat, Merck, DE
- Fettalkoholethoxylat, Lutensol AT25, BASF AG, DE
- Natriumdodecylbenzolsulfonat, Aldrich, DE
- Stearylalkohol, Fluka AG, Schweiz

Beispiel 1

Formulierungen auf der Basis Carnaubawachs / Pluriol 9000 (Formulierung 12-17) wurden aufgrund ihrer niedrigen Schmelzviskosität und ihrer niedrigen Glastemperatur nicht schmelzextrudiert und granuliert. Die Gemische aus Wirkstoff, Carnaubawachs und Pluriol 9000 wurden in Ansätzen von 50 g im 100 ml Glaskolben bei 120°C im Ölbad aufgeschmolzen und 10 Minuten mit einem Glasspatel homogenisiert. Anschließend wurden mit Hilfe einer Pasteurpipette Tropfen mit einem Durchmesser von etwa 2-3mm auf einer kalten Metallplatte abgelegt. Nach dem Abkühlen wurden die Wachsformulierungen vom Metallblech mit einem Spatel abgetrennt.

In folgenden Tabellen sind alle in der oben beschriebenen Weise, in der Hauptsache durch Schmelzextrusion (Formulierung 1-11 und 18-67), hergestellten Wirkstoff- bzw. Pflanzenschutzformulierungen aufgelistet. Nur die Formulierungen 9, 27-33, 38-43 und 48-53 gehören zu den beanspruchten Zuhereitungen. Die zudosierten Mengen in Gew.-%, bezogen auf die gesamte Zubereitung, sind den Tabellen zu entnehmen:

Tabelle 1

| Formulierung | Verbindung 1 | Vinnapas B5 | Vinnapas UW4 | Luviskol K30 | Luviskol VA64 |
|---|---|---|---|---|---|
| 1 | 5 | 57 | 38 | - | - |
| 2 | 5 | 54 | 36 | 5 | - |
| 3 | 5 | 54 | 36 | - | 5 |
| 4 | 5 | 51 | 34 | 10 | - |
| 5 | 5 | 51 | 34 | - | 10 |
| 6 | 5 | 45 | 30 | 20 | - |
| 7 | 5 | 45 | 30 | - | 20 |

Tabelle 2

| Formulierung | Verbindung 1 | Lupolen 1800S | Ecoflex | Vinnapas UW4 | Perfectamyl D6 |
|---|---|---|---|---|---|
| 8 | 5 | 40 | | | 55 |
| 9 | 5 | | 40 | | 55 |
| 10 | 5 | | | 40 | 55 |
| 11 | 5 | | | 60 | 35 |

Tabelle 3

| Formulierung | Verbindung 6 | Carnaubawachs | Pluriol 9000 |
|---|---|---|---|
| 12 | 5 | 76 | 19 |

Tabelle 3 (fortgesetzt)

| Formulierung | Verbindung 6 | Carnaubawachs | Pluriol 9000 |
|---|---|---|---|
| 13 | 5 | 57 | 38 |
| 14 | 5 | 38 | 57 |

Tabelle 4

| Formulierung | Verbindung 1 | Carnaubawachs | Pluriol 9000 |
|---|---|---|---|
| 15 | 5 | 76 | 19 |
| 16 | 5 | 57 | 38 |
| 17 | 5 | 38 | 57 |

Tabelle 5

| Formulierung | Verbindung 6 | Lupolen 1800S | Calciumcarbonat | Calciumsulfat | Natriumchlorid |
|---|---|---|---|---|---|
| 18 | 5 | 40 | 45 | | 10 |
| 19 | 5 | 50 | 35 | | 10 |
| 20 | 5 | 40 | 45 | 10 | |
| 21 | 5 | 50 | 35 | 10 | |

Tabelle 6

| Formulierung | Verbindung 6 | Lupolen 1800S | Vinnapas UW4 | Ecoflex | Calciumcarbonat | NPG | Pluriol 9000 |
|---|---|---|---|---|---|---|---|
| 22 | 5 | 40 | | | 45 | 10 | |
| 23 | 5 | 40 | | | 35 | 20 | |
| 24 | 5 | 40 | | | 45 | | 10 |
| 25 | 5 | 30 | | | 55 | | 10 |
| 26 | 5 | | 40 | | 45 | | 10 |
| 27 | 5 | | | 40 | 45 | | 10 |

Tabelle 7

| Formulierung | Verbindung 5 | Lupolen 1800S | Ecoflex | Perfectamyl D6 | Calciumcarbonat | Calciumsulfat |
|---|---|---|---|---|---|---|
| 28 | 5 | | 50 | 45 | | |
| 29 | 5 | | 70 | 25 | | |
| 30 | 5 | | 50 | | 45 | |
| 31 | 5 | | 70 | | 25 | |
| 32 | 5 | | 50 | | 35 | 10 |
| 33 | 5 | | 70 | | 15 | 10 |
| 34 | 5 | 50 | | | 45 | |
| 35 | 5 | 70 | | | 25 | |
| 36 | 5 | 50 | | | 35 | 10 |

Tabelle 7 (fortgesetzt)

| Formulierung | Verbindung 5 | Lupolen 1800S | Ecoflex | Perfectamyl D6 | Calciumcarbonat | Calciumsulfat |
|---|---|---|---|---|---|---|
| 37 | 5 | 70 | | | 15 | 10 |

Tabelle 8

| Formulierung | Verbindung 4 | Lupolen 1800S | Ecoflex | Perfectamyl D6 | Calciumcarbonat | Calciumsulfat |
|---|---|---|---|---|---|---|
| 38 | 5 | | 50 | 45 | | |
| 39 | 5 | | 70 | 25 | | |
| 40 | 5 | | 50 | | 45 | |
| 41 | 5 | | 70 | | 25 | |
| 42 | 5 | | 50 | | 35 | 10 |
| 43 | 5 | | 70 | | 15 | 10 |
| 44 | 5 | 50 | | | 45 | |
| 45 | 5 | 70 | | | 25 | |
| 46 | 5 | 50 | | | 35 | 10 |
| 47 | 5 | 70 | | | 15 | 10 |

Tabelle 9

| Formulierung | Verbindung 1 | Lupolen 1800S | Ecoflex | Perfectamyl D6 | Calciumcarbonat | Calciumsulfat |
|---|---|---|---|---|---|---|
| 48 | 5 | | 50 | 45 | | |
| 49 | 5 | | 70 | 25 | | |
| 50 | 5 | | 50 | | 45 | |
| 51 | 5 | | 70 | | 25 | |
| 52 | 5 | | 50 | | 35 | 10 |
| 53 | 5 | | 70 | | 15 | 10 |
| 54 | 5 | 50 | | | 45 | |
| 55 | 5 | 70 | | | 25 | |
| 56 | 5 | 50 | | | 35 | 10 |
| 57 | 5 | 70 | | | 15 | 10 |

Tabelle 10

| Formulierung | Verbindung 6 | Lupolen 1800S | Calciumcarbonat | Lutensol AT25 | Nadodecylbenzolsulfonat | Stearylalkohol | Carnaubawachs |
|---|---|---|---|---|---|---|---|
| 58 | 5 | 50 | 45 | | | | |
| 59 | 5 | 50 | 44 | 1 | | | |
| 60 | 5 | 50 | 44 | | 1 | | |
| 61 | 5 | 50 | 44 | | | 1 | |
| 62 | 5 | 50 | 40 | | | 5 | |
| 63 | 5 | 50 | 44 | | | | 1 |
| 64 | 5 | 50 | 40 | | | | 5 |

Tabelle 11

| Formulierung | Verbindung 4 | MTI 446 | Ecoflex | Kreide |
|---|---|---|---|---|
| 65 | 7 | 2 | 41 | 50 |
| 66 | 7 | 2 | 51 | 40 |
| 67 | 7 | 2 | 61 | 30 |
| alle Angaben Gew.% MTI 446 = Tefuranitdine (bevorzugtes Insektizid XII) | | | | |

Die erhaltenen Granulate wurden auf ihre Sedimentation in Wasser (1 g Granulat in 1 L Trinkwasser bei 20°C, 48h erschütterungsfreie Lagerung) und auf ihre Lagerstabilität ( 50 g Granulat, 14 Tage Lagerung in geschlossenen 100 ml Gefäßen, im Trockenschrank bei 54°C) hin untersucht. Granulate, die in Trinkwasser bei 20°C nach 48 h aufschwimmen, wurden mit N für Nein beurteilt. Granulate, die in Trinkwasser auf den Gefäßboden absinken mit J für Ja beurteilt. Granulate, die nach der Wärmelagerung formstabil und rieselfähig bleiben, wurden mit J für Ja beurteilt. Granulate, die nicht formstabil und rieselfähig bleiben, d.h. zu Verklebungen neigen, wurden mit N für Nein beurteilt.

| Formulierung | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Sedimentation | N | J | J | J | J | N | N | N | J | N | N | J | J | N | J |
| Lagerstabilität | N | N | N | N | N | N | N | J | J | N | N | N | N | N | N |

| Formulierung | 16 | 17 | 18 | 19 | 20 | 21 | 22 | 23 | 24 | 25 | 26 | 27 | 28 | 29 | 30 |
|---|---|---|---|---|---|---|---|---|---|---|---|---|---|---|---|
| Sedimentation | J | N | J | J | J | J | J | J | J | J | J | J | N | J | J |
| Lagerstabilität | N | N | J | J | J | J | J | J | J | J | J | J | J | J | J |

| Formulierung | 31 | 32 | 33 | 34 | 35 | 36 | 37 | 38 | 39 | 40 | 41 | 42 | 43 | 44 | 45 |
|---|---|---|---|---|---|---|---|---|---|---|---|---|---|---|---|
| Sedimentation | J | J | J | J | N | J | N | J | J | J | J | J | J | J | J |
| Lagerstabilität | J | J | J | J | J | J | J | J | J | J | J | J | J | J | J |

| Formulierung | 46 | 47 | 48 | 49 | 50 | 51 | 52 | 53 | 54 | 55 | 56 | 57 | 58 | 59 | 60 |
|---|---|---|---|---|---|---|---|---|---|---|---|---|---|---|---|
| Sedimentation | J | N | J | J | J | J | J | J | J | J | J | N | J | J | J |
| Lagerstabilität | J | J | J | J | J | J | J | J | J | J | J | J | J | J | J |

| Formulierung | 61 | 62 | 63 | 64 | 65 | 66 | 67 |
|---|---|---|---|---|---|---|---|
| Sedimentation | J | J | J | J | J | J | J |
| Lagerstabilität | J | J | J | J | J | J | J |

Die Polymerblends auf der Basis von Polyvinylacetat sedimentieren mäßig bis schlecht und sind nicht temperaturlagerstabil (Formulierung 1-7), sie verkleben irreversibel zu einer Masse.

Die Polymer/Stärkeblends sind in bezug auf Sedimentation und Lagerung eingeschränkt brauchbar (Formulierung 8-11, 28-29, 38-39, 48-49 ).

Die Wachsmatrices sedimentieren nur teilweise und sind in keinem Fall temperaturlagerstabil (Formulierung 12-17).

Die Formulierungen auf der Basis Polymer / mineralischer Füllstoff haben in Bezug auf Sedimentation und Lagerstabilität die besten Eigenschaften (Formulierung 18-27, 30-37, 40-47, 50-64, 65-67).

Beispiel 2

Neben den Randbedingungen der Stabilität bei Transport und Lagerung sowie der Sedimentationsfähigkeit in Bezug auf Wind und Wassererosion, sollen die erfindungsgemäßen Formulierungen die Pflanzenschutzwirkstoffe je nach Wirkstoff und Rezeptur kontrolliert langsam, d.h. in einer Zeit von einigen Tagen bis hin zu einigen Monaten freisetzen. Eine verzögerte Wirkstoffabgabe ist bei erwünschter langanhaltender Wirksamkeit oder Phytotoxizität der Wirkstoffe notwendig. Zu diesem Zweck wurde die Wirkstoffabgabe der Granulate in Wasser bestimmt.

Zur Bestimmung der Wirkstofffreisetzung wurden jeweils 1 g Granulat der obigen Formulierungen in einen 1 L Meßkolben gegeben und mit 1 L Trinkwasser überschichtet. Die Meßkolben wurden 4 Wochen und länger bei 25°C erschütterungsfrei gelagert. Zur Ermittlung der Wirkstofffreisetzung wurden in täglichen Abständen Proben entnommen. Vor der Probennahme wurde der Meßkolben um 180° gewendet und durchmischt, um eine homogene Wirkstoffverteilung sicherzustellen. Anschließend wurden die wässrigen Lösungen im UV/VIS-Spektroskop vermessen und in die Kolben zurückgegeben. Von den Wirkstoffen wurden zuvor Eichkurven (Absorption vs Konzentration) erstellt.

Folgendes Gerät wurde für die wirkstoffbestimmungen verwendet:

UV/VIS-Spektroskop, Gerät HP 8452, Diode Array Spectrophotometer, 1 cm Quarzküvette

Die Absorptionsmessungen wurden je nach Absorptionsmaximum für die verschiedenen wirkstoffe bei unterschiedlichen Wellenlängen durchgeführt ($\lambda$ = 200-250nm).

Die Freisetzungsverläufe aller Formulierungen (Formulierung 1-64) finden sich im Anhang. Aufgetragen wurden die prozentuale Freisetzung (100% entspricht der vollständigen Freisetzung von 50 ppm Wirkstoff bei 1g 5%iger Formulierung in 1 Liter wasser) gegen die Zeit in Tagen (siehe Abbildungen 1-10).

Die kumulierten Freisetzungen der Wirkstoffe zeigen einen wurzelfunktionsabhängigen Verlauf, wie es für einen Diffusionsprozess zu erwarten ist ($\sqrt{t}$ - Gesetz):

$$c = K \times \sqrt{t}$$

t: Zeit, c: Wirkstoffkonzentration

Zudem zeigt sich eine starke Abhängigkeit der Freisetzung von der Wasserlöslichkeit des Wirkstoffs und eine relativ geringe Abhängigkeit von der Granulatform und -große. Dies spricht für eine diffusionskontrollierte Porendiffusion. Für einen Erosionsmechanismus ist die Freisetzung zu langsam, für eine Matrixdiffusion ist die Freisetzung zu schnell. Füllstoffe und Additive beeinflussen die Freisetzung in erwartetem Maße.

Durch Variation der Mengen an Polymermatrix, Füllstoff und gegebenenfalls Additiv ist eine gezielte Einstellung der Wirkstofffreisetzung in Abhängigkeit von der Zeit möglich.

**Patentansprüche**

1. Feste Zubereitung eines Pflanzenschutzmittels mit verzögerter Wirkstofffreisetzung, erhältlich durch Herstellung einer Schmelze enthaltend

| | |
|---|---|
| 0.1-80 Gew.-% | eines im Pflanzenschutz verwendbaren Wirkstoffs oder einer Kombination solcher Wirkstoffe |
| 10-80 Gew.-% | mindestens eines mineralischen Füllstoffs |
| 0-20 Gew.-% | anorganische oder organische Additive |
| ad 100 Gew.-% | mindestens eines thermoplastischen, wasserunlöslichen Polymers aus der Gruppe der Polybutylenadipatterephthalate |

wobei die Summe aller Inhaltsstoffe gleich 100 Gew.-% ist und anschließender Formgebung.

2. Feste Zubereitung eines Pflanzenschutzmittels nach Anspruch 1, enthaltend als mineralischen Füllstoff Calciumcarbonat, Magnesiumsilikat oder Calciumsulfat.

3. Feste Zubereitung eines Pflanzenschutzmittels nach Anspruch 1 oder 2, enthaltend mindestens eine fungizid, herbizid, insektizid, acarizid oder wachstumsregulatorisch wirkende Verbindung oder eine Wirkstoffmischung aus der Gruppe dieser Verbindungen.

4. Feste Zubereitung eines Pflanzenschutzmittels nach Anspruch 1 oder 2, enthaltend mindestens eine fungizid oder herbizid wirkende Verbindung oder eine Wirkstoffmischung aus der Gruppe dieser Verbindungen.

5. Feste Zubereitung eines Pflanzenschutzmittels nach Anspruch 1 oder 2, enthaltend als Wirkstoff mindestens eine fungizide Verbindung der Formel I und II aus der Klasse der Strobilurine

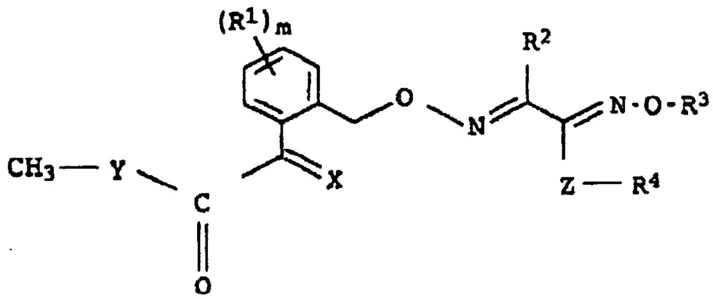

(I)

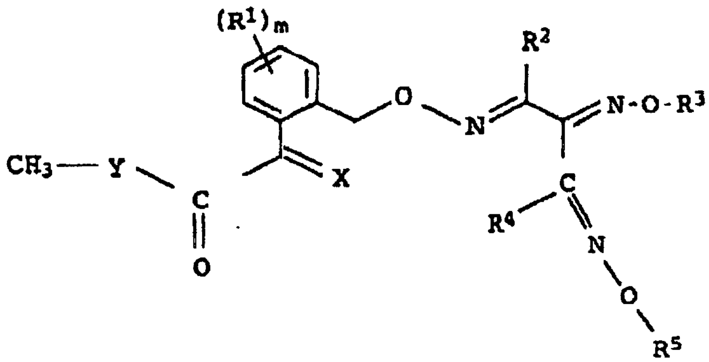

(II)

in der die Substituenten die folgende Bedeutung haben:

X NOCH$_3$, CHOCH$_3$, CHCH$_3$;

Y O, NH;

Z Sauerstoff, Schwefel, Amino (NH),

$R^1$ Wasserstoff, Cyano, Nitro, Trifluormethyl, Halogen, $C_1$-$C_4$-Alkyl und $C_1$-$C_4$-Alkoxy;

m 0, 1 oder 2, wobei die Reste $R^2$ verschieden sein können, wenn m für 2 steht;

$R^2$ Wasserstoff, Cyano, $C_1$-$C_4$-Alkyl, $C_1$-$C_4$-Halogenalkyl, $C_3$-$C_6$-Cycloalkyl;

$R^4$ Wasserstoff,
$C_1$-$C_6$-Alkyl, $C_2$-$C_6$-Alkenyl, $C_2$-$C_6$-Alkinyl, wobei die Kohlenwasserstoffreste dieser Gruppen partiell oder vollständig halogeniert sein können oder einen bis drei der folgenden Reste tragen können: Cyano, Nitro, Hydroxy, Mercapto,Amino, Carboxyl, Aminocarbonyl, Aminothiocarbonyl, Halogen, $C_1$-$C_6$-Alkylaminocarbonyl, Di-$C_1$-$C_6$-aikylaminocarbonyl, $C_1$-$C_6$-Aikylaminothiocarbonyl. Di-$C_1$-$C_6$-alkylaminothiocarbonyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_2$-$C_6$-Alkenyloxy, $C_3$-$C_6$-Cycloalkyl, $C_3$-$C_6$-Cycloalkyloxy, Heterocyclyl, Heterocyclyloxy, Aryl, Aryloxy, Aryl-$C_1$-$C_4$-alkoxy, Arylthio, Aryl-$C_1$-$C_4$-alkylthio, Hetaryl, Hetaryloxy, Hetaryl-$C_1$-$C_4$-alkoxy, Hetarylthio, Hetaryl-$C_1$-$C_4$-alkylthio, wo-

bei die cyclischen Reste ihrerseits partiell oder vollständig halogeniert sein können und/oder ein bis drei der folgenden Gruppen tragen können: Cyano, Nitro, Hydroxy, Mercapto, Amino, Carboxyl, Aminocarbonyl, Aminothiocarbonyl, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, Benzyl, Benzyloxy, Aryl, Aryloxy, Arylthio, Hetaryl, Hetaryloxy, Hetarylthio und C(=NOR$^7$)-$A_n$-R$^8$;

$C_3$-$C_6$-Cycloalkyl, $C_3$-$C_6$-Cycloalkenyl, Heterocyclyl, Aryl, Hetaryl, wobei die cyclischen Reste partiell oder vollständig haloqeniert sein können oder einen bis drei der folgenden Gruppen tragen können: Cyano, Nitro, Hydroxy, Mercapto, Amino, carboxyl, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, Benzyl, Benzyloxy, Aryl, Aryloxy, Hetaryl und Hetaryloxy;

$R^3$, $R^5$ unabhängig voneinander Wasserstoff,
$C_1$-$C_{10}$-Alkyl, $C_3$-$C_6$-Cycloalkyl, $C_2$-$C_{10}$-Alkenyl, $C_2$-$C_{10}$-Alkinyl, $C_1$-$C_{10}$-Alkylcarbonyl, $C_2$-$C_{10}$-Alkenylcarbonyl, $C_3$-$C_{10}$-Alkinylcarbonyl oder $C_1$-$C_{10}$-Alkylsulfonyl, wobei diese Reste partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1C_6$-Halogenalkyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, $C_3$-$C_6$-Cycloalkyl, $C_3$-$C_6$-Cycloalkyloxy, Heterocyclyl, Heterocyclyloxy, Benzyl, Benzyloxy, Aryl, Aryloxy, Arylthio, Hetaryl, Hetaryloxy und Hetarylthio, wobei die cyclischen Gruppen ihrerseits partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminuthiocarbonyl, $C_2$-$C_6$-Alkenyl, $C_2$-$C_6$-Alkenyloxy, Benzyl, Benzyloxy, Aryl, Aryloxy, Arylthio, Hetaryl, Hetaryloxy, Hetarylthio oder C (=NOR$^7$) -$A_n$-R$^8$;

Aryl, Arylcarbonyl, Arylsulfonyl, Hetaryl, Hetarylcarbonyl oder Hetarylsulfonyl, wobei diese Reste partiell oder vollständig halogeniert sein können oder einen bis drei der folgenden Gruppen tragen können: Cyano, Nitro, Hydroxy, Mercapto, Amino, Carboxyl, Aminocarbonyl, Aminothiocarbonyl, Halogen, $C_1$-$C_6$-Alkyl, $C_1$-$C_6$-Halogenalkyl, $C_1$-$C_6$-Alkylcarbonyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Benzyl, Benzyloxy, Aryl, Aryloxy, Hetaryl, Hetaryloxy oder C(=NOR$^7$)-$A_n$-R$^8$.
wobei

A für sauerstoff, schwefel oder Stickstoff steht und wobei der Stickstoff Wasserstoff oder $C_1$-$C_6$-Alkyl trägt;

n 0 oder 1 bedeutet;

$R^7$ Wasserstoff oder $C_1$-$C_6$-Alkyl bedeutet und

$R^8$ Wasserstoff oder $C_1$-$C_6$-Alkyl bedeutet,

sowie deren Salze;

**6.** Verfahren zur Herstellung einer festen Zubereitung eines Pflanzenschutzmittels gemäß einem oder mehreren der Ansprüche 1-5, **dadurch gekennzeichnet, daß** man mindestens einen Wirkstoff, mindestens einen mineralischen Füllstoff, mindestens ein thermoplastisches, wasserunlösliches Polymer aus der Gruppe der Polybutylenadipatterephthalate und gegebenenfalls übliche Additive in einem Extruder zu einem plastischen Gemisch aufschmilzt und die Schmelze direkt oder in einem nachfolgenden Schritt zu festen oder noch plastischen Pormen zerteilt.

**7.** Verfahren zur Bekämpfung von phytopathogenen Pilzen, unerwünschtem Pflanzenwuchs, unerwünschtem Insekten- oder Milbenbefall und/oder zur Regulation des Wachstums von Pflanzen, **dadurch gekennzeichnet, daß** man eine feste zubereitung eines Pflanzenschutzmittels gemäß einem oder mehrerer der Ansprüche 1-5 in fester Form auf Pflanzen, deren Lebensraum oder auf Saatgut einwirken läßt.

**8.** Verfahren zur Bekämpfung von phytopathogenen Pilzen, unerwünschtem Pflanzenwuchs, unerwünschtem Insekten- oder Milbenbefall und/oder zur Regulation des Wachstums von Pflanzen, **dadurch gekennzeichnet, daß** man eine feste Zubereitung eines Pflanzenschutzmittels gemäß einem oder mehrerer der Ansprüche 1-5 als Streugranulat auf Böden appliziert, die immer oder zeitweilig von Wasser bedeckt sind.

**9.** verfahren zur Bekämpfung von phytopathogenen Pilzen, unerwünschtem Pflanzenwuchs, unerwünschtem Insekten- oder Milbenbefall und/oder zur Regulation des Wachstums von Pflanzen, **dadurch gekennzeichnet, daß** man eine feste Zubereitung eines Pflanzenschutzmittels gemäß einem oder mehrerer der Ansprüche 1-5 als Streugranulat auf Pflanzen, deren Lebensraum oder auf Saatgut einwirken läßt, wann immer eine kontrollierte Freisetzung des oder der Wirkstoffe erforderlich ist.

**Claims**

**1.** A solid formulation of a crop protection product with delayed release of the active ingredient, obtainable by preparing a melt comprising

| | |
|---|---|
| 0.1-80% by wt. | of an active ingredient which can be used in crop protection, or of a combination of such active ingredients, |
| 10-80% by wt. | of at least one mineral filler, |
| 0-20% by wt. | of inorganic or organic additives, and |
| to 100% by wt. | of at least one thermoplastic water-insoluble polymer from the group consisting of polybutylene adipate terephthalates, |

the total of all constituents equaling 100% by weight, and subsequent shaping.

**2.** A solid formulation of a crop protection product as claimed in claim 1 comprising calcium carbonate, magnesium silicate or calcium sulfate as mineral filler.

**3.** A solid formulation of a crop protection product as claimed in claim 1 or 2 comprising at least one fungicidally, herbicidally, insecticidally, acaricidally or growth-regulatory active compound or a mixture of active ingredients selected from the group of these compounds.

**4.** A solid formulation of a crop protection product as claimed in claim 1 or 2 comprising at least one fungicidally or herbicidally active compound or a mixture of active ingredients selected from the group of these compounds.

**5.** A solid formulation of a crop protection product as claimed in claim 1 or 2 comprising, as active ingredient, at least one fungicidal compound of the formulae I and II from the class of the strobilurins

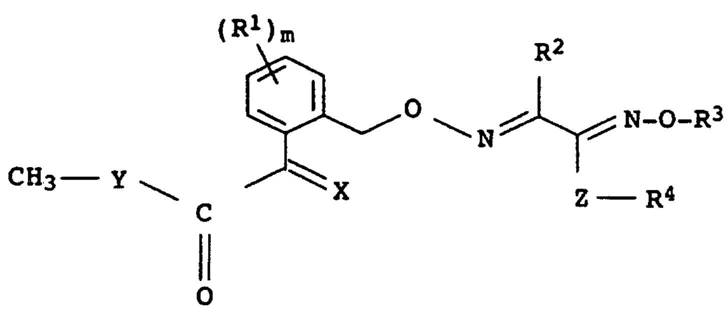

(I)

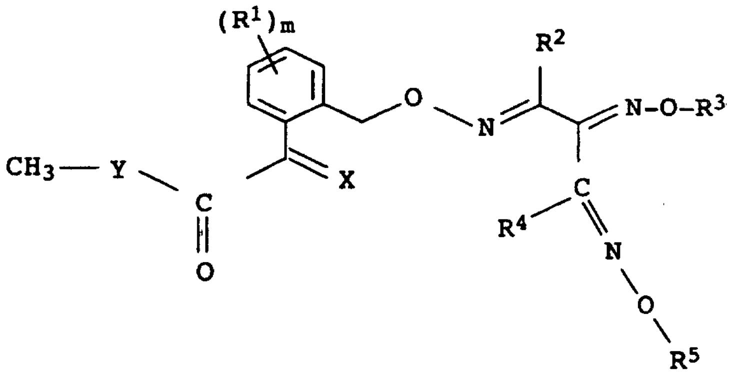

(II)

in which the substituents have the following meanings:

X is $NOCH_3$, $CHOCH_3$, $CHCH_3$;

Y is O, NH;

Z is oxygen, sulfur, amino (NH);

$R^1$ is hydrogen, cyano, nitro, trifluoromethyl, halogen, $C_1$-$C_4$-alkyl and $C_1$-$C_4$-alkoxy;

m is 0, 1 or 2, it being possible for the radicals $R^2$ to be different if m is 2;

$R^2$ is hydrogen, cyano, $C_1$-$C_4$-alkyl, $C_1$-$C_4$-haloalkyl, $C_3$-$C_6$-cycloalkyl;

$R^4$ is hydrogen,
$C_1$-$C_6$-alkyl, $C_2$-$C_6$-alkenyl, $C_2$-$C_6$-alkynyl, it being possible for the hydrocarbon radicals of these groups to be partially or fully halogenated or to have attached to them one to three of the following radicals: cyano, $C_1$-$C_{10}$-alkyl, $C_3$-$C_6$-cycloalkyl, $C_2$-$C_{10}$-alkenyl, $C_2$-$C_{10}$-alkynyl, $C_1$-$C_{10}$-alkylcarbonyl, $C_2$-$C_{10}$-alkenylcarbonyl, $C_3$-$C_{10}$-alkynylcarbonyl or $C_1$-$C_{10}$-alkylsulfonyl, it being possible for these radicals to be partially or fully halogenated or to have attached to them one to three of the following groups: cyano, nitro, hydroxyl, mercapto, amino, carboxyl, aminocarbonyl, aminothiocarbonyl, halogen, $C_1$-$C_6$-alkyl, $C_1$-$C_6$-haloalkyl, $C_1$-$C_6$-alkylsulfonyl, $C_1$-$C_6$-alkylsulfoxyl, $C_1$-$C_6$-alkoxy, $C_1$-$C_6$-haloalkoxy, $C_1$-$C_6$-alkoxycarbonyl, $C_1$-$C_6$-alkylthio, $C_1$-$C_6$-alkylamino, di-$C_1$-$C_6$-alkylamino, $C_1$-$C_6$-alkylaminocarbonyl, di-$C_1$-$C_6$-alkylaminocarbonyl, $C_1$-$C_6$-alkylaminothiocarbonyl, di-$C_1$-$C_6$-alkylaminothiocarbonyl, $C_2$-$C_6$-alkenyl, $C_2$-$C_6$-alkenyloxy, $C_3$-$C_6$-cycloalkyl, $C_3$-$C_6$-cycloalkyloxy, heterocyclyl, heterocyclyloxy, benzyl, benzyloxy, aryl, aryloxy, arylthio, hetaryl, hetaryloxy and hetarylthio, it being possible for the cyclic groups, in turn, to be partially or fully halogenated or to have attached to them one to three of the following groups: cyano, nitro, hydroxyl, mercapto, amino, carboxyl, aminocarbonyl, aminothiocarbonyl, halogen, $C_1$-$C_6$-alkyl, $C_1$-$C_6$-haloalkyl, $C_1$-$C_6$-alkylsulfonyl, $C_1$-$C_6$-alkylsulfoxyl, $C_3$-$C_6$-cycloalkyl, $C_1$-$C_6$-alkoxy, $C_1$-$C_6$-haloalkoxy, $C_1$-$C_6$-alkyloxycarbonyl, $C_1$-$C_6$-alkylthio, $C_1$-$C_6$-alkylamino, di-$C_1$-$C_6$-alkylamino, $C_1$-$C_6$-alkylaminocarbonyl, di-$C_1$-$C_6$-alkylaminocarbonyl, $C_1$-$C_6$-alkylaminothiocarbonyl, di-$C_1$-$C_6$-alkylaminothiocarbonyl, $C_2$-$C_6$-alkenyl, $C_2$-$C_6$-alkenyloxy, benzyl, benzyloxy, aryl, aryloxy, arylthio, hetaryl, hetaryloxy, hetarylthio or $C(=NOR^7)$-$A_n$-$R^8$;
aryl, arylcarbonyl, arylsulfonyl, hetaryl, hetarylcarbonyl or hetarylsulfonyl, it being possible for these radicals to be partially or fully halogenated or to have attached to them one to three of the following groups: cyano, nitro, hydroxyl, mercapto, amino, carboxyl, aminocarbonyl, aminothiocarbonyl, halogen, $C_1$-$C_6$-alkyl, $C_1$-$C_6$-haloalkyl, $C_1$-$C_6$-alkylcarbonyl, $C_1$-$C_6$-alkylsulfonyl, $C_1$-$C_6$-alkylsulfoxyl, $C_3$-$C_6$-cycloalkyl, $C_1$-$C_6$-alkoxy, $C_1$-$C_6$-haloalkoxy, $C_1$-$C_6$-alkyloxycarbonyl, $C_1$-$C_6$-alkylthio, $C_1$-$C_6$-alkylamino, di-$C_1$-$C_6$-alkylamino, $C_1$-$C_6$-alkylaminocarbonyl, di-$C_1$-$C_6$-alkylaminocarbonyl, $C_1$-$C_6$-alkylaminothiocarbonyl, di-$C_1$-$C_6$-alkylaminothiocarbonyl, $C_2$-$C_6$-alkenyl, $C_2$-$C_6$-alkenyloxy, benzyl, benzyloxy, aryl, aryloxy, hetaryl, hetaryloxy or $C(=NOR^7)$-$A_n$-$R^8$,

where

A is oxygen, sulfur or nitrogen and where the nitrogen has attached to it hydrogen or $C_1$-$C_6$-alkyl;

n is 0 or 1;

$R^7$ is hydrogen or $C_1$-$C_6$-alkyl and

$R^8$ is hydrogen or $C_1$-$C_6$-alkyl,

and their salts.

**6.** A process for the preparation of a solid formulation of a crop protection product as claimed in one or more of claims 1-5, which comprises melting at least one active ingredient, at least one mineral filler, at least one thermoplastic polymer which is insoluble in water from the group consisting of polybutylene adipate terephthalates and, if appropriate, customary additives in an extruder to give a plastic mixture and dividing the melt directly or in a subsequent step to give shapes which are solid or still retain plasticity.

**7.** A method of controlling phytopathogenic fungi, undesired vegetation, undesired attack by insects or mites and/or for the regulation of plant growth, which comprises allowing a solid formulation of a crop protection product as claimed in one or more of claims 1-5 in solid form to act on plants, their environment or on seed.

**8.** A method of controlling phytopathogenic fungi, undesired vegetation, undesired attack by insects or mites and/or for the regulation of plant growth, which comprises applying a solid formulation of a crop protection product as claimed in one or more of claims 1-5 as granules for spreading to soils which are always or temporarily flooded with water.

**9.** A method of controlling phytopathogenic fungi, undesired vegetation, undesired attack by insects or mites and/or for the regulation of plant growth, which comprises allowing a solid formulation of a crop protection product as claimed in one or more of claims 1-5 in the form of granules for spreading to act on plants, their environment or on seed, whenever controlled release of the active ingredient(s) is required.

## Revendications

**1.** Formulation solide d'un agent de protection des plantes du type à libération retardée de la substance active, que l'on obtient en préparant une masse fondue contenant :

à concurrence de 0,1 à 80 % en poids, une substance active utile dans la protection des plantes ou encore une combinaison de substances actives de ce type
à concurrence de 10 à 80 % en poids, au moins une matière de charge minérale
à concurrence de 0 à 20 % en poids, des additifs inorganiques ou organiques
pour compléter à 100 % en poids, au moins un polymère thermoplastique insoluble dans l'eau choisi parmi le groupe des polybutylène-adipate-téréphtalates,

la somme de tous les constituants étant égale à 100 % en poids, et en procédant à un façonnement ultérieur.

**2.** Formulation solide d'un agent de protection des plantes selon la revendication 1, contenant, à titre de matière de charge minérale, du carbonate de calcium, du silicate de magnésium ou du sulfate de calcium.

**3.** Formulation solide d'un agent de protection des plantes selon la revendication 1 ou 2, contenant au moins un composé à activité fongicide, herbicide, insecticide, acaricide ou régulatrice de la croissance ou encore un mélange de substances actives choisies parmi le groupe de ces composés.

**4.** Formulation solide d'un agent de protection des plantes selon la revendication 1 ou 2, contenant au moins un composé à activité fongicide ou herbicide ou encore un mélange de substances actives choisies parmi le groupe de ces composés.

**5.** Formulation solide d'un agent de protection des plantes selon la revendication 1 ou 2, contenant, à titre de substance active, au moins un composé fongicide répondant aux formules I et II de la classe des strobilurines

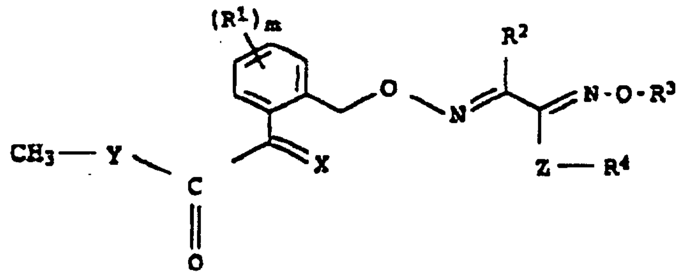

(I)

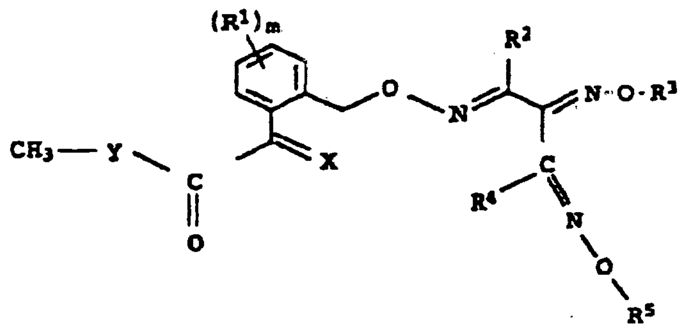

(II)

formules dans lesquelles les substituants possèdent la signification ci-après :

X représente un groupe $NOCH_3$, un groupe $CHOCH_3$, un groupe $CHCH_3$ ;

Y représente un atome d'oxygène, un groupe NH ;

Z représente un atome d'oxygène, un atome de soufre, un groupe amino (NH) ;

$R^1$ représente un atome d'hydrogène, un groupe cyano, un groupe nitro, un groupe trifluorométhyle, un atome d'halogène, un groupe alkyle en $C_1$-$C_4$, et un groupe alcoxy en $C_1$-$C_4$

m est égal à 0, 1 ou 2, les radicaux $R^2$ pouvant être différents, lorsque m est égal à 2 ;

$R^2$ représente un atome d'hydrogène, un groupe cyano, un groupe alkyle en $C_1$-$C_4$, un groupe halogénalkyle en $C_1$-$C_4$, un groupe cycloalkyle en $C_3$-$C_6$ ;

$R^4$ représente un atome d'hydrogène,
un groupe alkyle en $C_1$-$C_6$, un groupe alcényle en $C_2$-$C_6$, un groupe alcynyle en $C_2$-$C_6$, les radicaux d'hydrocarbures de ces groupes pouvant être partiellement ou complètement halogénés ou pouvant porter de 1 à 3 radicaux parmi ceux indiqués ci-après : un groupe cyano, un groupe nitro, un groupe hydroxyle, un groupe mercapto, un groupe amino, un groupe carboxyle, un groupe aminocarbonyle, un groupe amino-thiocarbonyle, un atome d'halogène, un groupe alkyl(en $C_1$-$C_6$)aminocarbonyle, un groupe dialkyl(en $C_1$-$C_6$)amino-carbonyle, un groupe alkyl(en $C_1$-$C_6$)aminothiocarbonyle, un groupe dialkyl (en $C_1$-$C_6$)aminothiocarbonyle, un groupe alkyl(en $C_1$-$C_6$)sulfonyle, un groupe alkyl(en $C_1$-$C_6$)sulfoxy, un groupe alcoxy en $C_1$-$C_6$, un groupe halogénalcoxy en $C_1$-$C_6$, un groupe alcoxy(en $C_1$-$C_6$)carbonyle, un groupe alkyl(en $C_1$-$C_6$)thio, un groupe alkyl(en $C_1$-$C_6$)amino, un groupe dialkyl(en $C_1$-$C_6$)amino, un groupe alcényl(en $C_2$-$C_6$)oxy, un groupe cycloalkyle en $C_3$-$C_6$, un groupe cycloalkyl(en $C_3$-$C_6$)oxy, un groupe hétérocyclyle, un groupe hétérocyclyloxy, un groupe aryle, un groupe aryloxy, un groupe arylalcoxy en $C_1$-$C_4$, un groupe arylthio, un groupe arylalkyl(en $C_1$-$C_4$)thio, un groupe hétaryle, un groupe hétaryloxy, un groupe hétarylalcoxy en $C_1$-$C_4$, un groupe hétarylthio, un groupe hétarylalkyl(en $C_1$-$C_4$) thio, les radicaux cycliques pouvant, pour leur part, être partiellement ou complètement halogénés et/ou pouvant porter de 1 à 3 groupes parmi ceux repris ci-après : un groupe cyano, un groupe nitro, un

groupe hydroxyle, un groupe mercapto, un groupe amino, un groupe carboxyle, un groupe aminocarbonyle, un groupe aminothiocarbonyle, un groupe alkyle en $C_1$-$C_6$, un groupe halogénalkyle en $C_1$-$C_6$, un groupe alkyl(en $C_1$-$C_6$)sulfonyle, un groupe alkyl(en $C_1$-$C_6$)sulfoxy, un groupe cycloalkyle en $C_3$-$C_6$, un groupe alcoxy en $C_1$-$C_6$, un groupe halogénalcoxy en $C_1$-$C_6$, un groupe alcoxy(en $C_1$-$C_6$)-carbonyle, un groupe alkyl(en $C_1$-$C_6$)thio, un groupe alkyl(en $C_1$-$C_6$)amino, un groupe dialkyl(en $C_1$-$C_6$)amino, un groupe alkyl(en $C_1$-$C_6$)aminocarbonyle, un groupe dialkyl(en $C_1$-$C_6$)aminocarbonyle, un groupe alkyl(en $C_1$-$C_6$)aminothio-carbonyle, un groupe dialkyl(en $C_1$-$C_6$)aminothiocarbonyle, un groupe alcényle en $C_2$-$C_6$, un groupe alcényl(en $C_2$-$C_6$)oxy, un groupe benzyle, un groupe benzyloxy, un groupe aryle, un groupe aryloxy, un groupe arylthio, un groupe hétaryle, un groupe hétaryloxy, un groupe hétarylthio et un groupe C(=NOR$^7$)-$A_n$-R$^8$ ;

un groupe cycloalkyle en $C_3$-$C_6$, un groupe cycloalcényle en $C_3$-$C_6$, un groupe hétérocyclyle, un groupe aryle, un groupe hétaryle, les radicaux cycliques pouvant être partiellement ou complètement halogénés ou pouvant porter de 1 à 3 groupes parmi ceux repris ci-après : un groupe cyano, un groupe nitro, un groupe hydroxyle, un groupe mercapto, un groupe amino, un groupe carboxyle, un groupe aminocarbonyle, un groupe aminothiocarbonyle, un atome d'halogène, un groupe alkyle en $C_1$-$C_6$, un groupe halogénalkyle en $C_1$-$C_6$, un groupe alkyl(en $C_1$-$C_6$)sulfonyle, un groupe alkyl(en $C_1$-$C_6$)sulfoxy, un groupe cycloalkyle en $C_3$-$C_6$, un groupe alcoxy en $C_1$-$C_6$, un groupe halogénalcoxy en $C_1$-$C_6$, un groupe alcoxy(en $C_1$-$C_6$)carbonyle, un groupe alkyl(en $C_1$-$C_6$)thio, un groupe alkyl(en $C_1$-$C_6$)amino, un groupe dialkyl(en $C_1$-$C_6$)amino, un groupe allkyl(en $C_1$-$C_6$)aminocarbonyle, un groupe dialkyl(en $C_1$-$C_6$)aminocarbonyle, un groupe alkyl(en $C_1$-$C_6$)aminothiocarbonyle, un groupe dialkyl(en $C_1$-$C_6$)aminothiocarbonyle, un groupe alcényle en $C_2$-$C_6$, un groupe alcényl(en $C_2$-$C_6$)oxy, un groupe benzyle, un groupe benzyloxy, un groupe aryle, un groupe aryloxy, un groupe hétaryle et un groupe hétaryloxy ;

$R^3$, $R^5$ représentent indépendamment l'un de l'autre un atome d'hydrogène,
un groupe alkyle en $C_1$-$C_{10}$, un groupe cycloalkyle en $C_3$-$C_6$, un groupe alcényle en $C_2$-$C_{10}$, un groupe alcynyle en $C_2$-$C_{10}$, un groupe alkyl(en $C_1$-$C_{10}$)carbonyle, un groupe alcényl(en $C_2$-$C_{10}$)carbonyle, un groupe alcynyl(en $C_3$-$C_{10}$)carbonyle ou un groupe alkyl(en $C_1$-$C_{10}$)sulfonyle, ces radicaux pouvant être partiellement ou complètement halogénés ou pouvant porter de 1 à 3 groupes parmi ceux repris ci-après : un groupe cyano, un groupe nitro, un groupe hydroxyle, un groupe mercapto, un groupe amino, un groupe carboxyle, un groupe aminocarbonyle, un groupe aminothiocarbonyle, un atome d'halogène, un groupe alkyle en $C_1$-$C_6$, un groupe halogénalkyle en $C_1$-$C_6$, un groupe alkyl(en $C_1$-$C_6$)sulfonyle, un groupe alkyl(en $C_1$-$C_6$)sulfoxy, un groupe alcoxy en $C_1$-$C_6$, un groupe halogénalcoxy en $C_1$-$C_6$, un groupe alcoxy(en $C_1$-$C_6$)carbonyle, un groupe alkyl(en $C_1$-$C_6$)thio, un groupe alkyl(en $C_1$-$C_6$)amino, un groupe dialkyl(en $C_1$-$C_6$)amino, un groupe alkyl(en $C_1$-$C_6$)aminocarbonyle, un groupe dialkyl(en $C_1$-$C_6$)aminocarbonyle, un groupe alkyl(en $C_1$-$C_6$)aminothiocarbonyle, un groupe dialkyl(en $C_1$-$C_6$)aminothiocarbonyle, un groupe alcényle en $C_2$-$C_6$, un groupe alcényl(en $C_2$-$C_6$)oxy, un groupe cycloalkyle en $C_3$-$C_6$, un groupe cycloalkyl(en $C_3$-$C_6$)oxy, un groupe hétérocyclyle, un groupe hétérocyclyloxy, un groupe benzyle, un groupe benzyloxy, un groupe aryle, un groupe aryloxy, un groupe arylthio, un groupe hétaryle, un groupe hétaryloxy et un groupe hétarylthio, les radicaux cycliques pouvant, pour leur part, être partiellement ou complètement halogénés ou pouvant porter de 1 à 3 groupes parmi ceux repris ci-après : un groupe cyano, un groupe nitro, un groupe hydroxyle, un groupe mercapto, un groupe amino, un groupe carboxyle, un groupe aminocarbonyle, un groupe aminothiocarbonyle, un atome d'halogène, un groupe alkyle en $C_1$-$C_6$, un groupe halogénalkyle en $C_1$-$C_6$, un groupe alkyl(en $C_1$-$C_6$)sulfonyle, un groupe alkyl(en $C_1$-$C_6$)sulfoxy, un groupe cycloalkyle en $C_3$-$C_6$, un groupe alcoxy en $C_1$-$C_6$, un groupe halogénalcoxy en $C_1$-$C_6$, un groupe alkylalcoxy(en $C_1$-$C_6$)carbonyle, un groupe alkyl(en $C_1$-$C_6$)thio, un groupe alkyl(en $C_1$-$C_6$)amino, un groupe dialkyl(en $C_1$-$C_6$)amino, un groupe alkyl(en $C_1$-$C_6$)amino-carbonyle, un groupe dialkyl(en $C_1$-$C_6$)aminocarbonyle, un groupe alkyl(en $C_1$-$C_6$)aminothiocarbonyle, un groupe dialkyl-(en $C_1$-$C_6$)aminothiocarbonyle, un groupe alcényle en $C_2$-$C_6$, un groupe alcényl(en $C_2$-$C_6$)oxy, un groupe benzyle, un groupe benzyloxy, un groupe aryle, un groupe aryloxy, un groupe arylthio, un groupe hétaryle, un groupe hétaryloxy, un groupe hétarylthio ou un groupe C(=NOR$^7$)-$A_n$-R$^8$ ;

un groupe aryle, un groupe arylcarbonyle, un groupe arylsulfonyle, un groupe hétaryle, un groupe hétarylcarbonyle ou un groupe hétarylsulfonyle, ces radicaux pouvant être partiellement ou complètement halogénés ou pouvant porter de 1 à 3 groupes parmi ceux repris ci-après : un groupe cyano, un groupe nitro, un groupe hydroxyle, un groupe mercapto, un groupe amino, un groupe carboxyle, un groupe aminocarbonyle, un groupe aminothiocarbonyle, un atome d'halogène, un groupe alkyle en $C_1$-$C_6$, un groupe halogénalkyle en $C_1$-$C_6$, un groupe alkyl(en $C_1$-$C_6$)carbonyle, un groupe alkyl(en $C_1$-$C_6$)sulfonyle, un groupe alkyl(en $C_1$-$C_6$)sulfoxy, un groupe cycloalkyle en $C_3$-$C_6$, un groupe alcoxy en $C_1$-$C_6$, un groupe halogénalcoxy en $C_1$-$C_6$, un groupe alkylalcoxy(en $C_1$-$C_6$)carbonyle,

un groupe alkyl(en $C_1$-$C_6$)thio, un groupe alkyl(en $C_1$-$C_6$)amino, un groupe dialkyl(en $C_1$-$C_6$)amino, un groupe alkyl(en $C_1$-$C_6$)amino-carbonyle, un groupe dialkyl(en $C_1$-$C_6$)aminocarbonyle, un groupe alkyl(en $C_1$-$C_6$)amino-thiocarbonyle, un groupe dialkyl-(en $C_1$-$C_6$)aminothiocarbonyle, un groupe alcényle en $C_2$-$C_6$, un groupe alcényl (en $C_2$-$C_6$)oxy, un groupe benzyle, un groupe benzyloxy, un groupe aryle, un groupe aryloxy, un groupe hétaryle, un groupe hétaryloxy ou un groupe C(=NOR$^7$)-A$_n$-R$^8$ ;

A représentant un atome d'oxygène, un atome de soufre ou un atome d'azote et l'atome d'azote portant un atome d'hydrogène ou un groupe alkyle en $C_1$-$C_6$ ;

n est égal à 0 ou 1 ;

$R^7$ représente un atome d'hydrogène ou un groupe alkyle en $C_1$-$C_6$ ; et

$R^8$ représente un atome d'hydrogène ou un groupe alkyle en $C_1$-$C_6$ ;

ainsi que leurs sels.

6. Procédé pour la préparation d'une formulation solide d'un agent de protection des plantes selon une ou plusieurs des revendications 1 à 5, **caractérisé en ce qu'**on porte à fusion au moins une substance active, au moins une matière de charge minérale, au moins un polymère thermoplastique insoluble dans l'eau choisi parmi le groupe des polybutylène-adipate-téréphtalates et le cas échéant des additifs habituels dans une extrudeuse pour obtenir un mélange plastique et on divise la masse fondue directement ou dans une étape ultérieure pour obtenir des formes solides ou encore plastiques.

7. Procédé pour lutter contre des champignons phytopathogènes, contre une croissance de plantes non désirées, contre une attaque non désirée d'insectes ou d'acariens et/ou pour la régulation de la croissance de plantes, **caractérisé en ce qu'**on laisse agir une formulation solide d'un agent de protection des plantes selon une ou plusieurs des revendications 1 à 5 sous forme solide sur des plantes, sur leur biotope ou encore sur des semences.

8. Procédé pour lutter contre des champignons phytopathogènes, contre une croissance de plantes non désirées, contre une attaque non désirée d'insectes ou d'acariens et/ou pour la régulation de la croissance de plantes, **caractérisé en ce qu'**on applique une formulation solide d'un agent de protection des plantes selon une ou plusieurs des revendications 1 à 5 sous la forme de granulé de dispersion, sur des sols qui sont recouverts d'eau à demeure ou de manière temporaire.

9. Procédé pour lutter contre des champignons phytopathogènes, contre une croissance de plantes non désirées, contre une attaque non désirée d'insectes ou d'acariens et/ou pour la régulation de la croissance de plantes, **caractérisé en ce qu'**on laisse agir une formulation solide d'un agent de protection des plantes selon une ou plusieurs des revendications 1 à 5 sous la forme de granulé de dispersion, sur des plantes, sur leur biotope ou encore sur des semences, à chaque fois qu'une libération contrôlée de la ou des substances actives est requise.

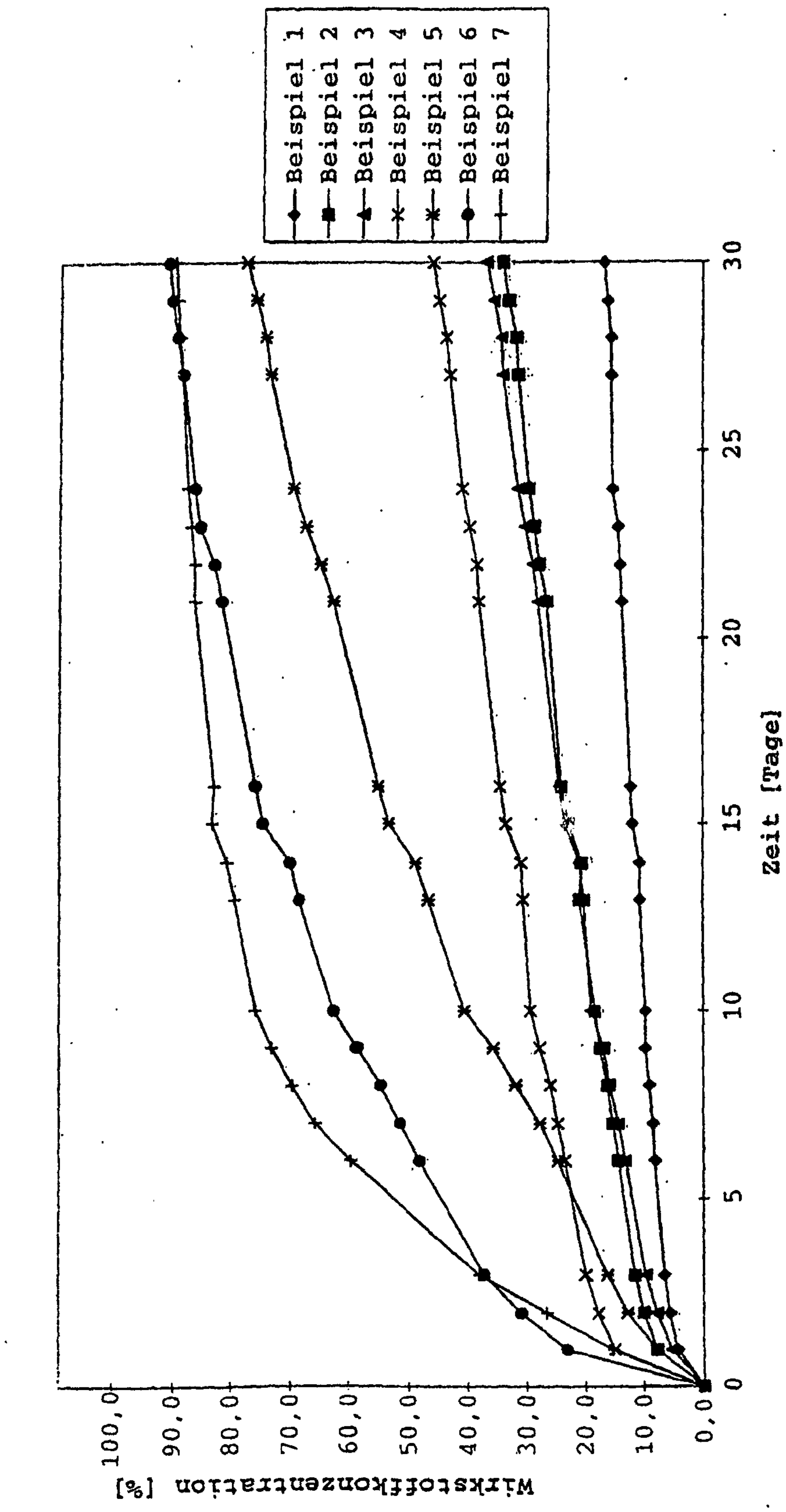
Beispiel 1
Beispiel 2
Beispiel 3
Beispiel 4
Beispiel 5
Beispiel 6
Beispiel 7
Wirkstoffkonzentration [%]
100,0
90,0
80,0
70,0
60,0
50,0
40,0
30,0
20,0
10,0
0,0
0
5
10
15
20
25
30
Zeit [Tage]

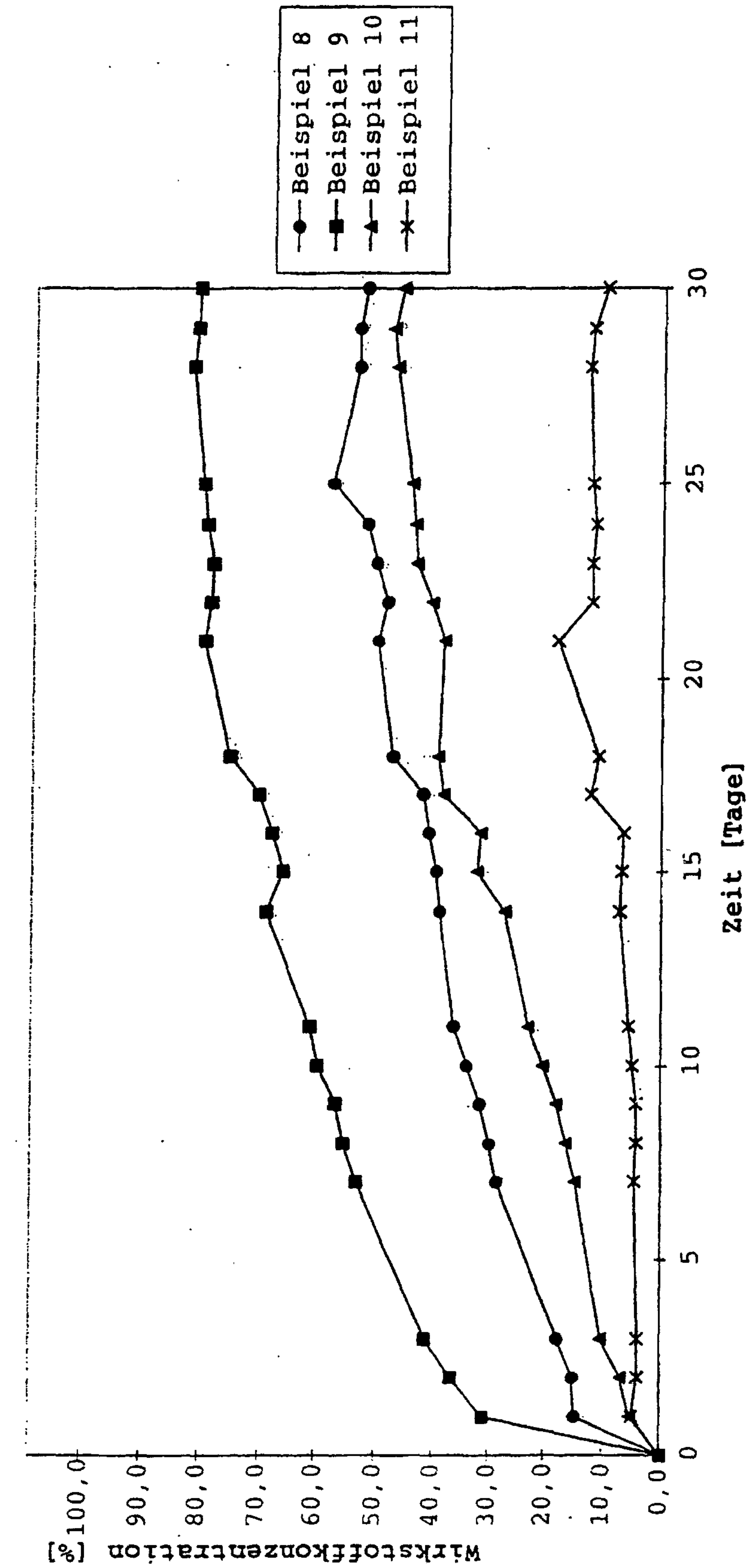
Beispiel 8
Beispiel 9
Beispiel 10
Beispiel 11
Wirkstoffkonzentration [%]
100,0
90,0
80,0
70,0
60,0
50,0
40,0
30,0
20,0
10,0
0,0
0
5
10
15
20
25
30
Zeit [Tage]

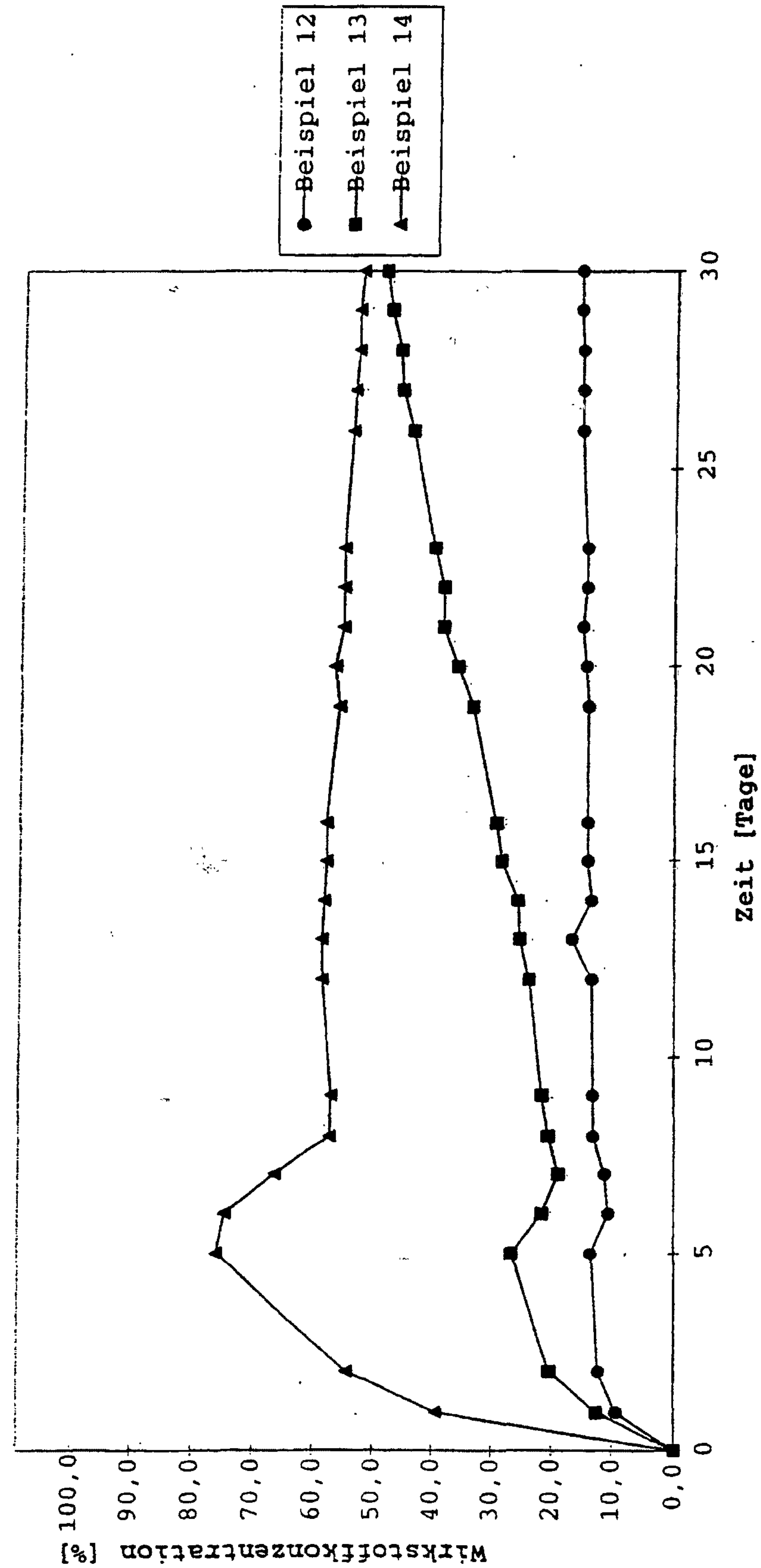
Beispiel 12
Beispiel 13
Beispiel 14
Wirkstoffkonzentration [%]
0,0
10,0
20,0
30,0
40,0
50,0
60,0
70,0
80,0
90,0
100,0
Zeit [Tage]
0
5
10
15
20
25
30

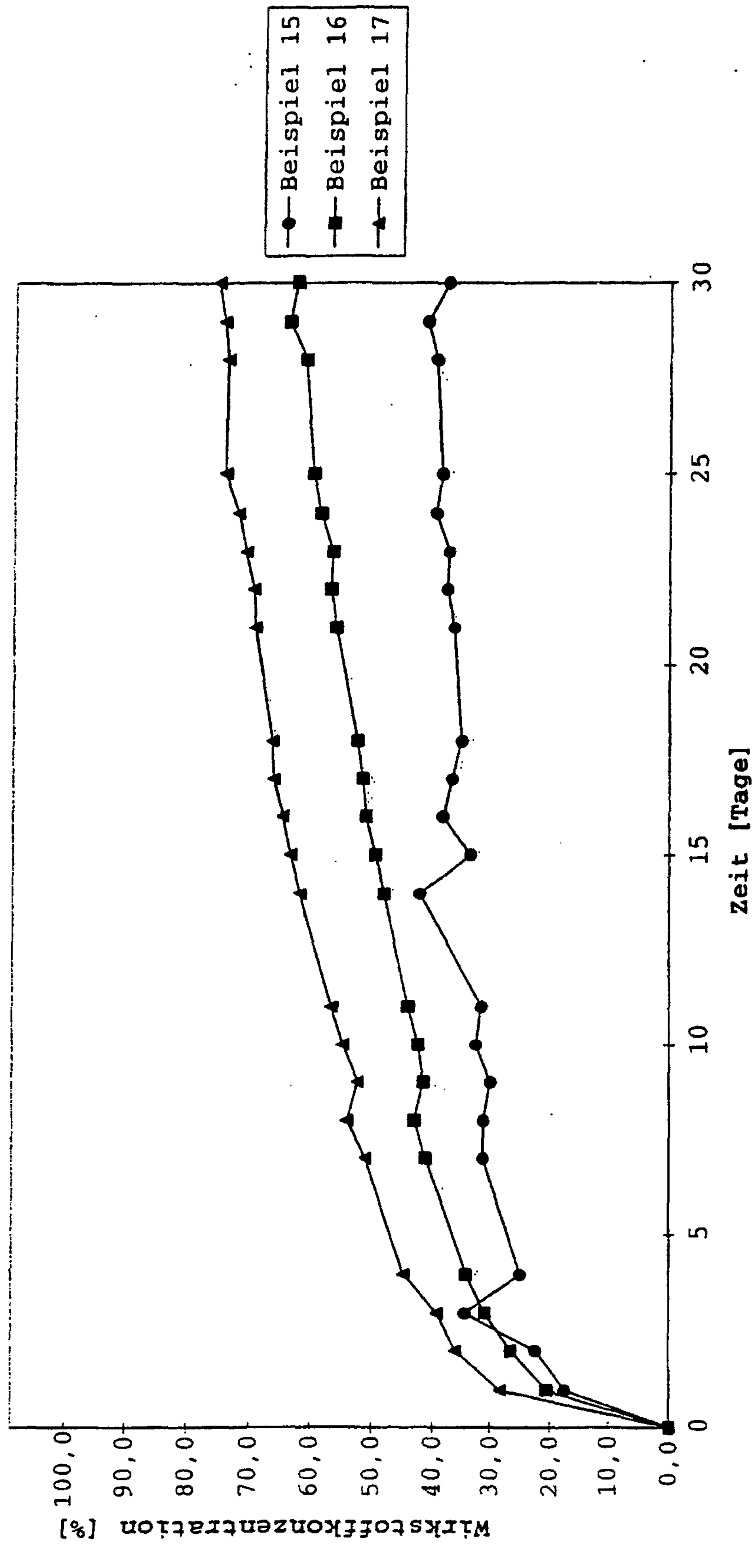
Beispiel 15
Beispiel 16
Beispiel 17
Wirkstoffkonzentration [%]
100,0
90,0
80,0
70,0
60,0
50,0
40,0
30,0
20,0
10,0
0,0
0
5
10
15
20
25
30
Zeit [Tage]

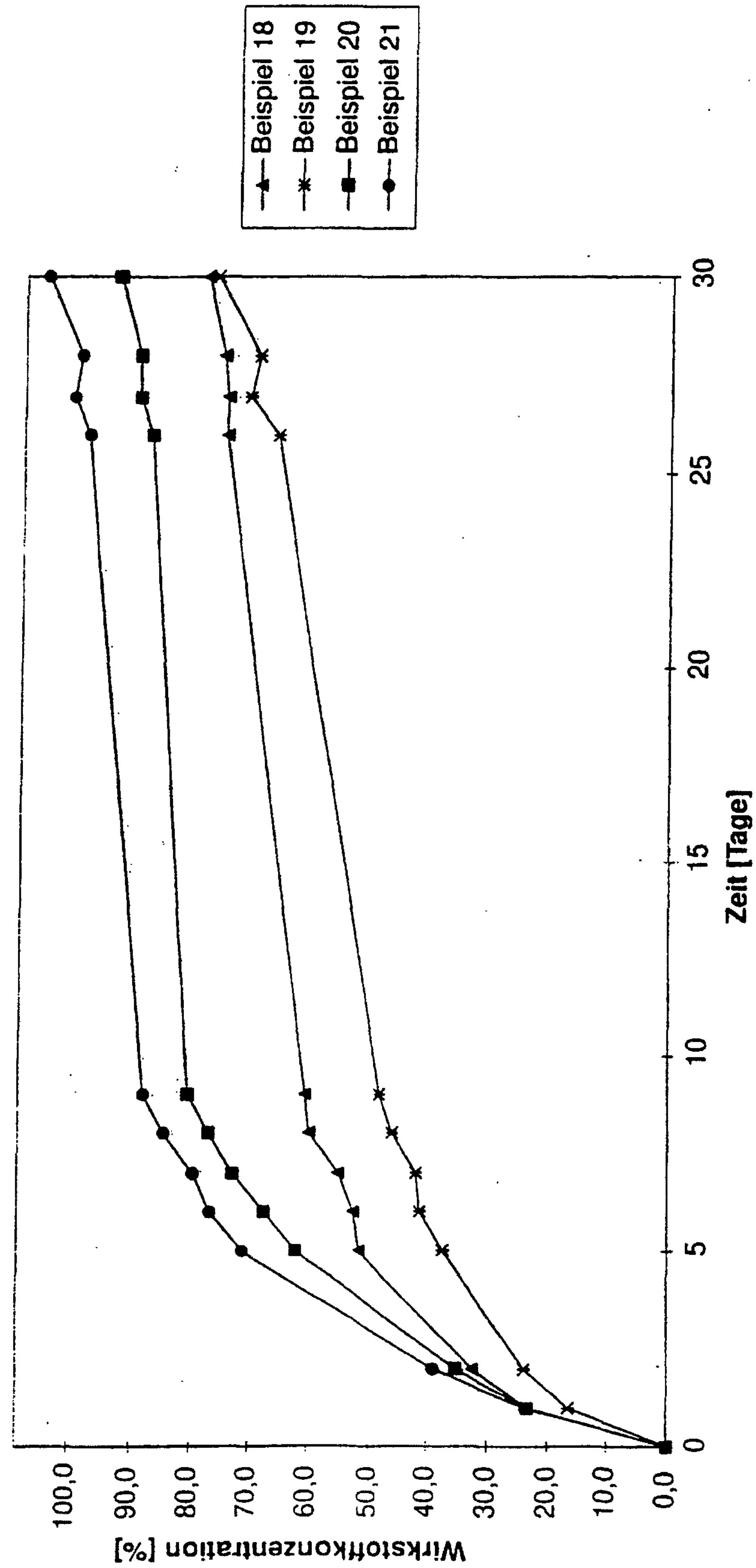
Beispiel 18
Beispiel 19
Beispiel 20
Beispiel 21
Wirkstoffkonzentration [%]
100,0
90,0
80,0
70,0
60,0
50,0
40,0
30,0
20,0
10,0
0,0
0
5
10
15
20
25
30
Zeit [Tage]

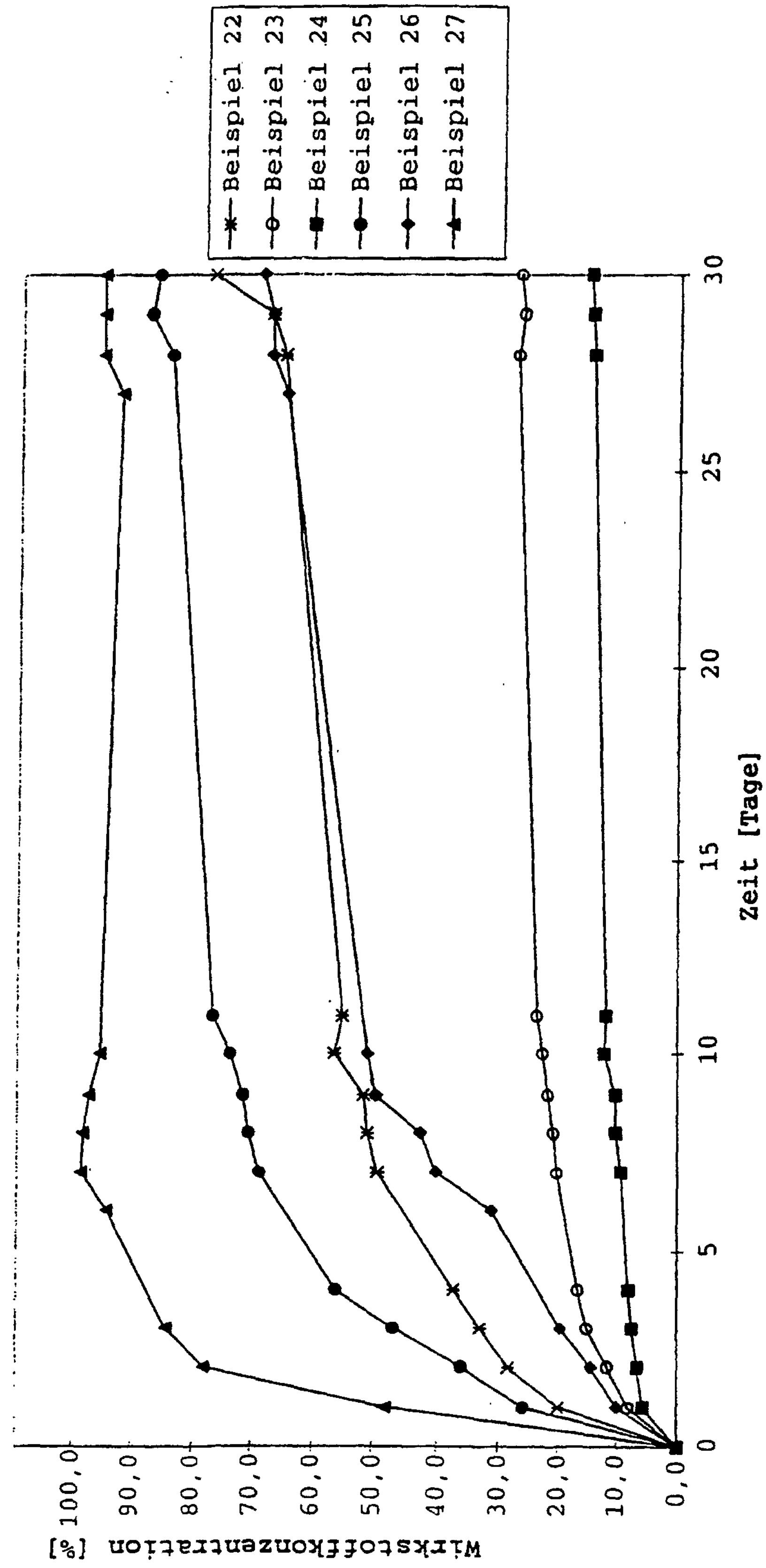
Beispiel 22
Beispiel 23
Beispiel 24
Beispiel 25
Beispiel 26
Beispiel 27
Wirkstoffkonzentration [%]
100,0
90,0
80,0
70,0
60,0
50,0
40,0
30,0
20,0
10,0
0,0
Zeit [Tage]
0
5
10
15
20
25
30

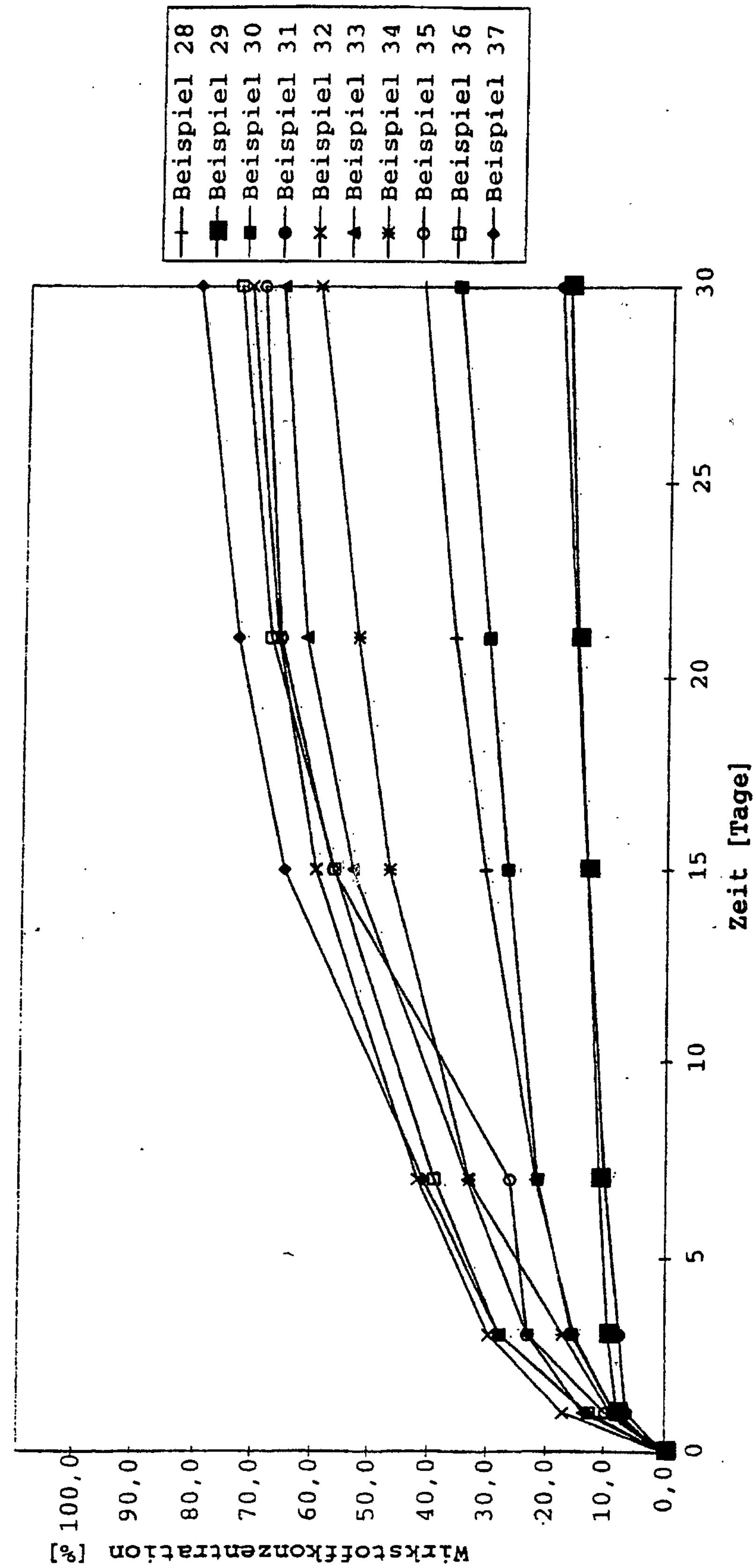
Beispiel 28
Beispiel 29
Beispiel 30
Beispiel 31
Beispiel 32
Beispiel 33
Beispiel 34
Beispiel 35
Beispiel 36
Beispiel 37
Wirkstoffkonzentration [%]
100,0
90,0
80,0
70,0
60,0
50,0
40,0
30,0
20,0
10,0
0,0
0
5
10
15
20
25
30
Zeit [Tage]

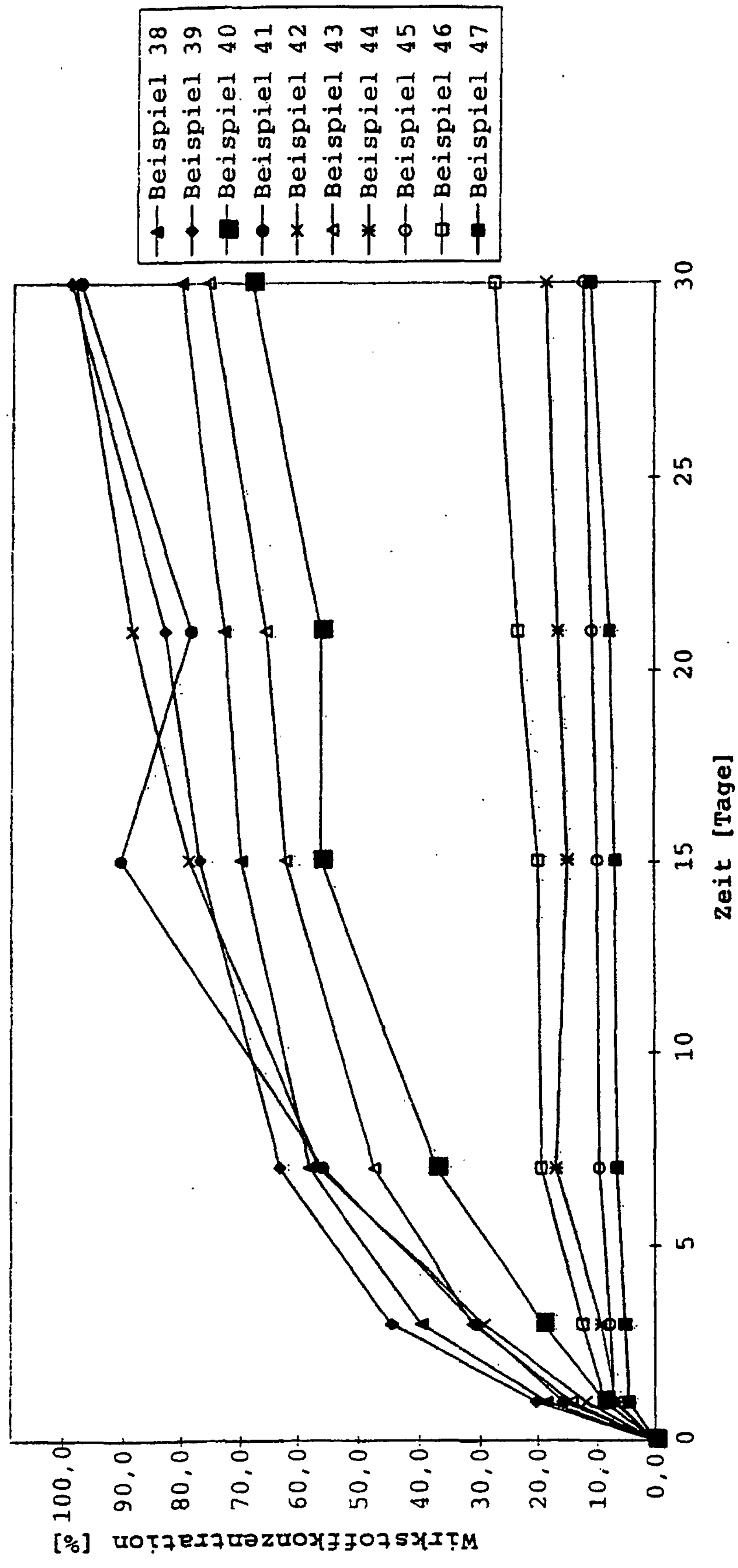
Beispiel 38
Beispiel 39
Beispiel 40
Beispiel 41
Beispiel 42
Beispiel 43
Beispiel 44
Beispiel 45
Beispiel 46
Beispiel 47
Wirkstoffkonzentration [%]
100,0
90,0
80,0
70,0
60,0
50,0
40,0
30,0
20,0
10,0
0,0
Zeit [Tage]
0
5
10
15
20
25
30

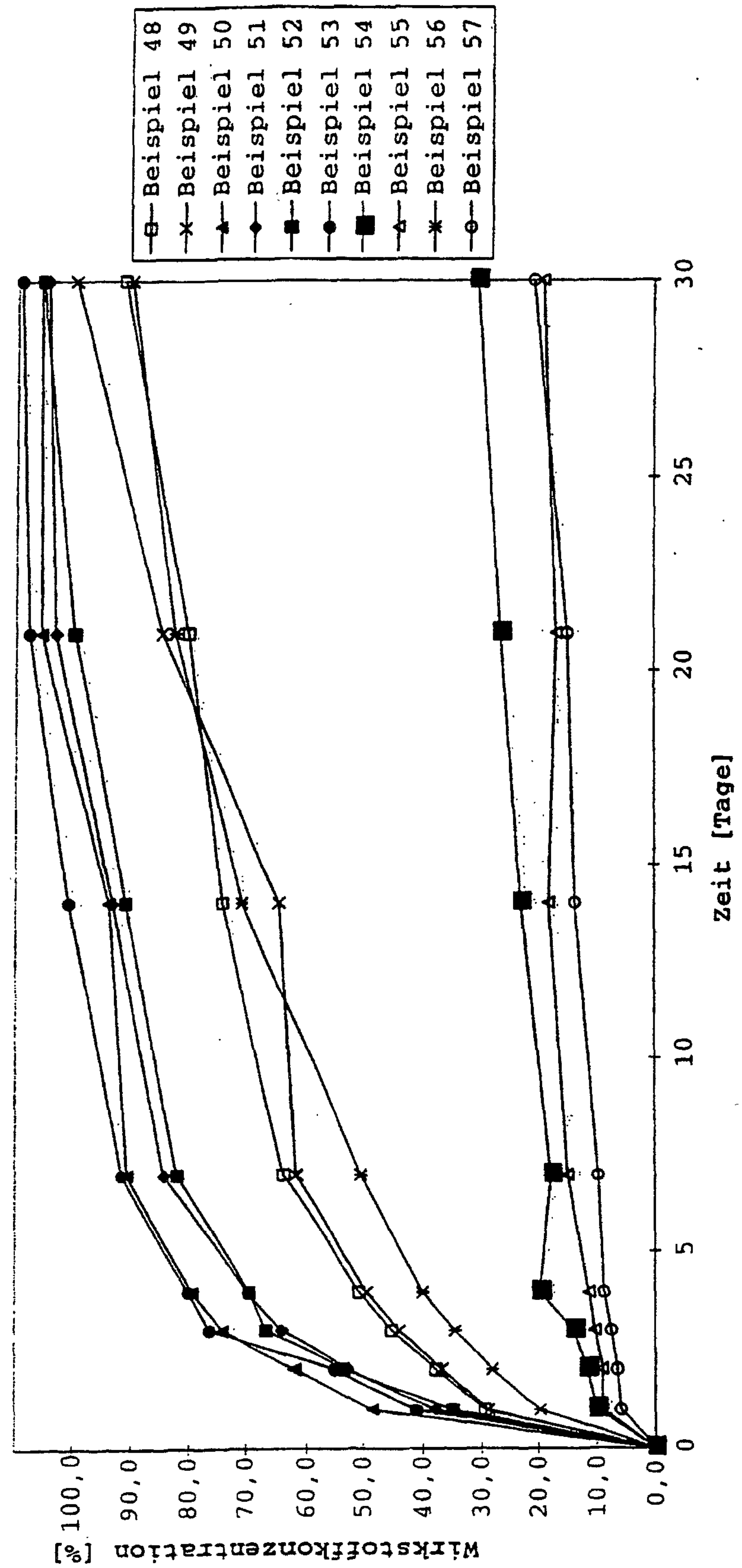
Beispiel 48
Beispiel 49
Beispiel 50
Beispiel 51
Beispiel 52
Beispiel 53
Beispiel 54
Beispiel 55
Beispiel 56
Beispiel 57
Wirkstoffkonzentration [%]
0,0
10,0
20,0
30,0
40,0
50,0
60,0
70,0
80,0
90,0
100,0
Zeit [Tage]
0
5
10
15
20
25
30

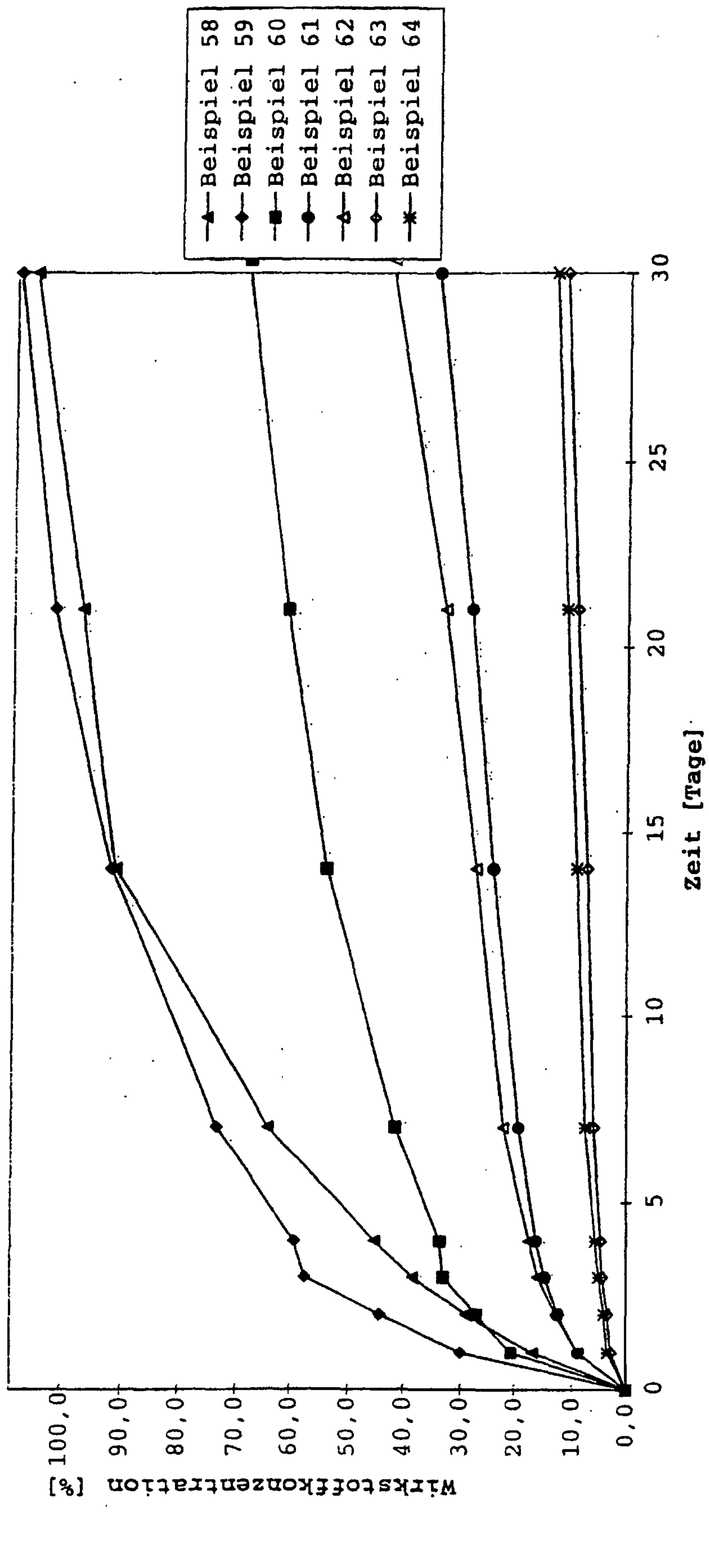
Beispiel 58
Beispiel 59
Beispiel 60
Beispiel 61
Beispiel 62
Beispiel 63
Beispiel 64
Wirkstoffkonzentration [%]
100,0
90,0
80,0
70,0
60,0
50,0
40,0
30,0
20,0
10,0
0,0
0
5
10
15
20
25
30
Zeit [Tage]

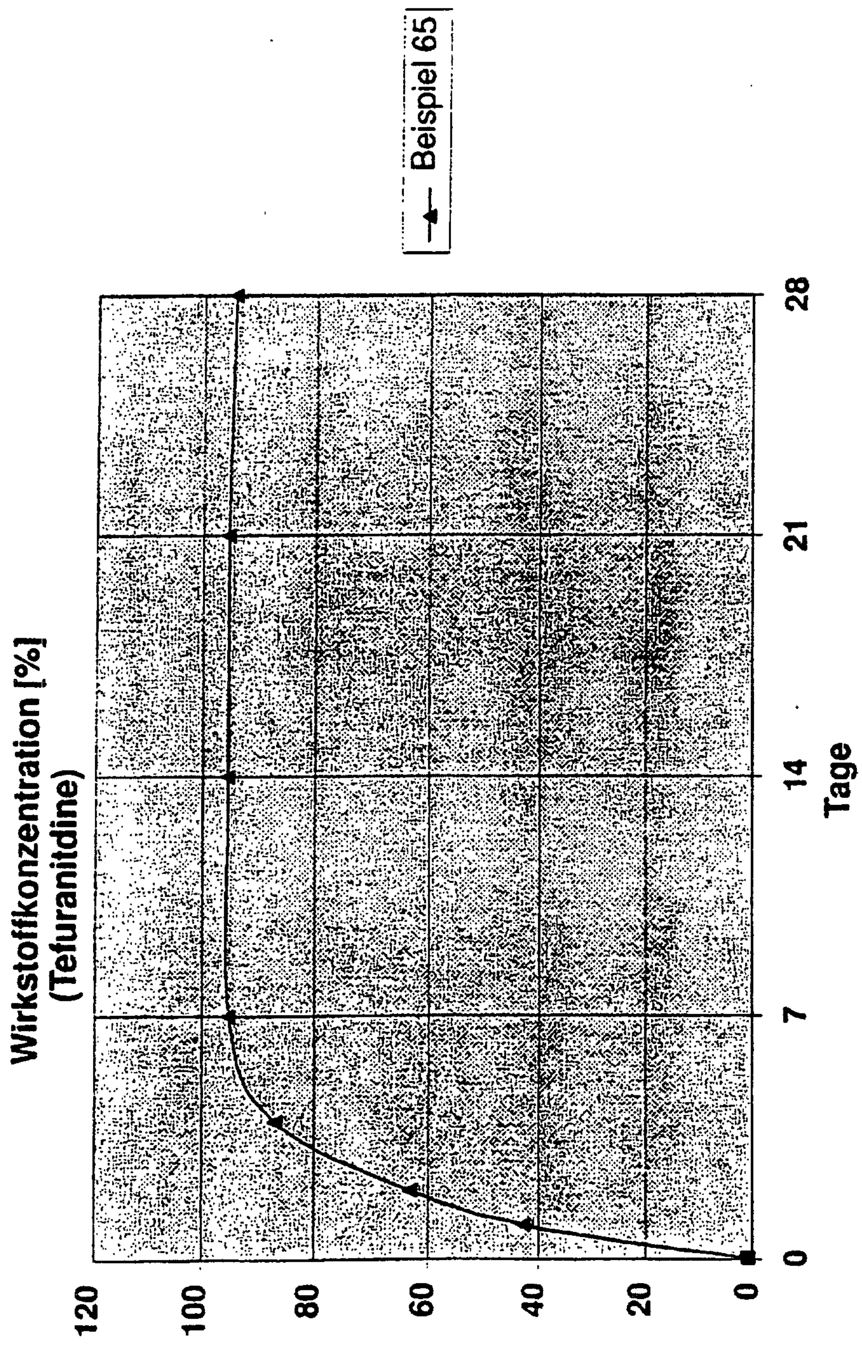
Wirkstoffkonzentration [%]
(Tefuranitdine)
120
100
80
60
40
20
0
0
7
14
21
28
Tage
Beispiel 65

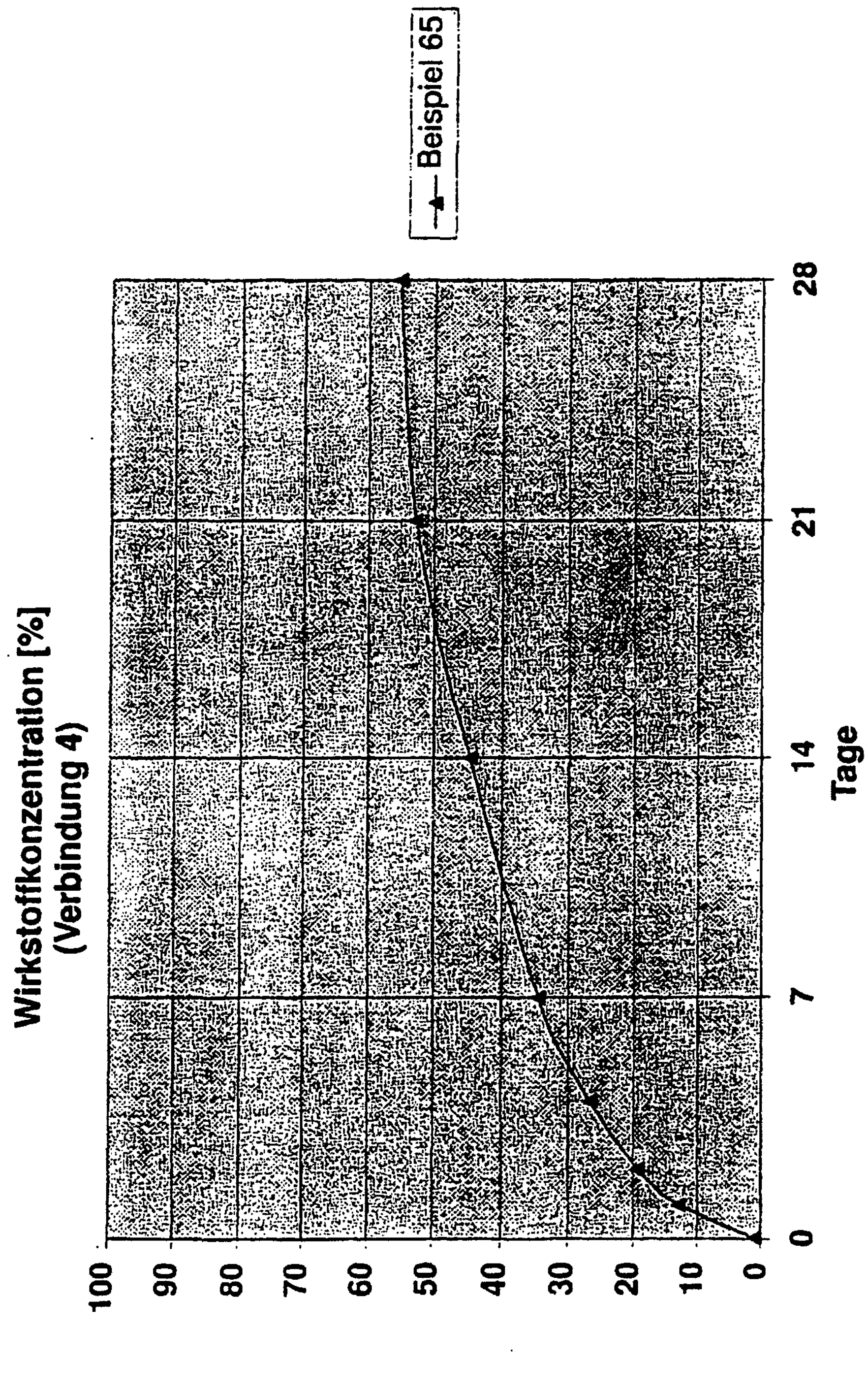
Wirkstoffkonzentration [%]
(Verbindung 4)
Beispiel 65
Tage
0
7
14
21
28
0
10
20
30
40
50
60
70
80
90
100